# EUROPEAN PATENT SPECIFICATION

(11) **EP 4 367 642 B1**
(45) Date of publication and mention of the grant of the patent: **07.10.2026**
(21) Application number: 22856569.3
(22) Date of filing: 10.08.2022
(51) Int. Cl.: G06V 40/10

(54) **SYSTEMS AND METHODS FOR AUTOMATED SOCIAL SYNCHRONY MEASUREMENTS**
SYSTEME UND VERFAHREN FÜR AUTOMATISIERTE SOZIALE SYNCHRONITÄTSMESSUNGEN
SYSTÈMES ET PROCÉDÉS PERMETTANT DES MESURES DE SYNCHRONISATION SOCIALE AUTOMATISÉES

(30) Priority: 10.08.2021 US 202163231398 P
(43) Date of publication of application: 15.05.2024
(73) Proprietor: Duke University, Durham, NC 27705 (US)
(72) Inventor: BORG, Jana Schaich, Durham, North Carolina 27705 (US); MEYNARD, Adrien, Durham, North Carolina 27705 (US); WU, Hau-Tieng, Durham, North Carolina 27705 (US)
(74) Representative: Harris, Oliver John Richard
(86) International application number: PCT/US2022/039974
(87) International publication number: WO 2023/018814

(56) References cited:
- KR-A- 20160 059 390
- KR-A- 20160 059 390
- US-A1- 2008 091 512
- US-A1- 2011 035 188
- US-A1- 2012 036 448
- US-A1- 2012 036 448
- US-A1- 2017 311 803
- US-A1- 2017 311 803
- US-A1- 2019 200 888

## Description

### CROSS REFERENCE TO RELATED APPLICATION

This application claims the benefit of U.S. Provisional Patent Application Serial No. 63/231,398, filed August 10, 2021.

### BACKGROUND

When humans interact with each other, their emotions, actions, movements, and physiology become coordinated and interdependent over time, a phenomenon collectively referred to as "social synchrony". These synchronized social interactions can take many forms, including imitation (such as unconsciously mimicking a partner's smile) and synchronized oscillatory movements (such as when people entrain their footsteps when walking together). In typically developing populations, these types of social synchrony correlate with how much two people like each other, trust each other, and cooperate. Causal manipulations of behavioral synchrony between two people (such as asking people to imitate each other or engage in a rhythmic task in tandem) also correlates with synchrony between those two people's heart beats and neural oscillations, leading to the hypothesis that behavioral synchrony is a mechanism for coordinating inter-person physiological synchrony.

Enough evidence has been collected to convince researchers across fields that social synchrony is a critical aspect of how human interaction and social decision-making works, so much so that robotics researchers are avidly looking for ways to allow robots to engage in this type of synchrony. Despite this enthusiasm, little is known about exactly what aspects of social synchrony are important for overall social functioning or for specific tasks, or how best to measure behaviorally-relevant social synchrony. This lack of knowledge is largely a result of a lack of methods to study the phenomenon. Hence, there is an ongoing opportunity for systems and methods to improve understanding of social synchrony.

US 2017/311803 A1 discloses obtaining neural activity data for a first subject and a second subject during verbal interaction between the first subject and the second subject, and calculating coherence between the neural activity data for the first subject and the neural activity data for the second subject. US 2019/200888 A1 refers to inducing an emotional state in a patient for treating neurological disorders, involving exposing a target subject to a stimulus modulated according to a selected profile representing and being adapted to induce a desired emotional state. KR 2016 0059390 A relates to determining a degree of social affinity . US 2012/036448 A1 discloses a system for managing user interfaces configured for categorizing users according to one of common user characteristics and common user behaviours with respect to a main domain to yield a group of users.

### BRIEF SUMMARY

Techniques and systems for providing automated social synchrony measurements are described. The described techniques provide an automated method for measuring multivariate social synchrony in social interactions. The described techniques can also identify behaviorally relevant social synchrony by allowing for the identification of aspects of social synchrony in a social scene which are important for a given prediction target (behavior, trait, or outcome). When doing so, the described techniques allow for dynamic time lags, do not assume that the relationships between features are stationary, and do not assume the relationships between different sets of features are the same or even in the same direction.

A method for automated social synchrony measurements can include receiving a recording of a social interaction between a first participant and a second participant, the social interaction comprising features exchanged between the first participant and the second participant; for each feature of the features exchanged between the first participant and the second participant, extracting, from the recording, a feature time series pair comprising a first time series of the first participant and a second time series of the second participant; for each feature time series pair, determining an individual social synchrony level between the feature time series pair using characteristics of a dynamic time warping path of the feature time series pair; analyzing the determined individual social synchrony levels of every feature time series pair to identify a set of the features exchanged between the first participant and the second participant related to a prediction target; and generating a notification for at least one feature of the set of the features exchanged between the first participant and the second participant related to the prediction target based on the determined individual social synchrony level of the at least one feature.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

**Figure 1** illustrates a snapshot of an example graphical user interface displaying notifications associated with a level of social synchrony between participants of a social interaction according to certain embodiments of the invention.
**Figure 2** illustrates a snapshot of another example graphical user interface displaying notifications associated with a level of social synchrony between participants of a social interaction according to certain embodiments of the invention.
**Figure 3** illustrates an example operating environment in which various embodiments of the invention may be practiced.
**Figures 4A-4C** illustrates an example process for providing automated social synchrony measurements according to certain embodiments of the invention.
**Figure 5** illustrates an example implementation of automated social synchrony measurements.
**Figures 6A and 6B** illustrate an example social synchrony prediction engine, where Figure 6A shows a process flow for generating models and Figure 6B shows a process flow for operation.
**Figures 7A and 7B** illustrate components of example computing systems that may carry out the described processes.
**Figure 8** illustrates a histogram of H actions.
**Figure 9** shows Table I illustrating an amount of information lost by matching pursuit.
**Figure 10** depicts an example of a "Brow Lower" action unit (AU) signal reconstructed after the combined operations of smoothing and matching pursuit.
**Figure 11** shows an example pair of AUs aligned by dynamic time warping (DTW) vs. derivative DTW (DDTW).
**Figure 12** shows the deviation from the diagonal of the warping paths obtained via DDTW vs. DTW, and the associated values of a median deviation from the diagonal of the DDTW warping path (WP-meddev).
**Figure 13** shows Table II illustrating a proportion of elastic net models that retained indicated action unit.
**Figure 14** displays box plots of each AU's WP-meddev social synchrony, according to the outcome of the Trust Game, where highlighted boxes indicate AUs that have social synchrony that statistically contribute to predicting Trust Game outcomes.
**Figure 15** shows Table III, which illustrates prediction accuracy, obtained via successive 5-fold cross validations that preserve the class distribution.

### DETAILED DESCRIPTION

Techniques and systems for providing automated social synchrony measurements are described. The described techniques provide an automated method for measuring multivariate social synchrony in social interactions. The described techniques can also identify behaviorally relevant social synchrony by allowing for the identification of aspects of social synchrony in a social scene which are important for a given prediction target (including a behavior, trait, or outcome). Advantageously, when doing so, the described techniques allow for dynamic time lags, do not assume that the relationships between features are stationary, and do not assume the relationships between different sets of features are the same or even in the same direction.

To determine a degree of social synchrony between two individuals, there are several problems to overcome. One problem is that it is difficult and time-consuming to collect data about social synchrony. As a consequence, social synchrony studies tend to have very small sample sizes, and there are a limited number available. Examples of features that researchers have used in the past include subjective measurements of how coordinated two people seem to be, or binary ratings of whether one person imitated another person's gesture within a set time window. More recently, computer scientists have created larger social synchrony data sets for some types of unsupervised data mining, but these datasets do not include external variables to correlate with the social synchrony, and they often do not include full frontal views and hence allow limited examination.

A second problem to overcome is that there are currently no statistical or computational tools capable of detecting and analyzing the combination of features that are coordinated over time to contribute to specific behaviors, traits, or outcomes. There are many aspects of a social interaction that may be integral to social synchrony, but it is not always known which ones are most relevant for a given prediction target, such as a behavior, trait, or outcome. Further, relevant features may not be independent from one another or even limited to physical actions. Features can be interrelated, and there can be outside parameters that affect social synchrony, such as certain behaviors and clinical diagnoses. For example, a condition of autism or personality disorder can have an impact on social synchrony.

Additionally, feature coordination includes a time-based aspect that has historically been difficult to measure. Simple distance metrics between time series may not be sufficient to represent the kinds of semi-rhythmic give-and-take dynamics that are believed to be meaningful to social synchrony. Further, real-world social interactions are complex, have directionality, and change rapidly over time.

Advantageously, unlike conventional social synchrony methods, the described techniques assess overall coordination or social synchrony rather than very specific, rhythmic types of oscillations in isolation. Indeed, rather than using conventional approaches such as windowed cross correlation or coherence to look at the relationship between two features, the described techniques use characteristics of the dynamic time warping (DTW) warping path, in particular the distance from a diagonal of a dynamic time warping (DTW) warping path, which allow for dynamic time lags, do not assume that the relationships between features are stationary, and do not assume the relationships between different sets of features are the same or even in the same direction.

Rather than focus on single features of a social interaction, the described techniques can accommodate investigation of multiple fine-grained features of a social interaction simultaneously and identify which ones are behaviorally-relevant, prediction-relevant, or outcome-relevant, even when the features are not fully independent from each other. That is, unlike conventional univariate social synchrony methods, the described techniques take more than one kind of possible social synchrony into account at once. Despite being able to assess the relevance of multiple types of social synchrony at once, it identifies which types of social synchrony are relevant in a completely transparent and interpretable way (it is not a black-box technique).

Advantageously, the described techniques allow for the identification of how types of social synchrony between different types of features (including, but not limited to, movements, sounds, or words, and emotions) correlate with behaviors, traits, and diagnoses, and thus provide insight into how human brains process social information, as well as mechanisms for developing practical tools, including tools that screen for social disorders, predict negotiation outcomes, improve customer service interactions, or engender trust in social robots and avatars, and that can give feedback about the types of social synchrony that occur or do not occur during related activities.

The terms "coordination", "interactional synchrony", and "social synchrony" can be used interchangeably herein. As used herein, the term "coordination" can be defined in more than one aspect. Historically in human studies, coordination has sometimes referred to the degree of temporal alignment between subjects in a specific manner (e.g., how closely a particular action is mirrored, such as smiling). Other times, coordination has been used more subjectively to refer to how well subjects are perceived to cooperate and/or relate to one another (e.g., being "on the same wavelength"). Combining these previous uses, social synchrony can indicate the extent to which two people are coordinated objectively and subjectively over time.

Social synchrony types can be characterized by the individual pair of features the social synchrony is assessed from and/or the characteristics of the derivative time warping paths used to measure or represent the social synchrony. Thus, "type of social synchrony" is social synchrony between a specific pair of features and measured using a specific characteristic (or set of characteristics) of the derivative time warping path used to align/compare the time series of those two features.

As used herein, the term "feature" and "feature set" generally refers to the input variables that are used in the methods and algorithms disclosed herein. Features can be extracted from a wide variety of factors that are known to influence and comprise social interactions. Some examples include, but are not limited to, facial expressions and actions; facial action units (AUs); posture; eye contact; body movement; head pose; emotional indicators such as flushing and eye dilation; voice characteristics such as voice tone, cadence, and volume level; biometric signals, such as heart rate, respiration rate, blood pressure, and body temperature; brain activity; and many other features that will be evident to a person of skill in the art. Facial AUs refer to minimal units of facial activity that are anatomically separate and visually distinguishable. Examples of AUs include a lip stretch, a lip corner, a lip tighten, a lip raise, a lip part, a lip pull, a nose wrinkle, a jaw drop, a chin raise, a dimple, a cheek raise, a brow lower, an inner brow, an outer brow, a lid tighten, a lid raise, and a blink. Emotional expressions comprise multiple AUs working in tandem to different degrees in different people. It is within the scope of the disclosure for the feature set to include any of the aforementioned or other relevant features.

Advantageously, the described systems and techniques can impact a wide variety of fields and applications from brain-machine interfaces, to search algorithms, to audio classification algorithms. There are many uses for detecting behaviorally-relevant, trait-relevant, or outcome-relevant aspects of social synchrony. In one example, detecting trait-relevant aspects of social synchrony can help screen for and diagnose psychiatric disease, especially diseases characterized by social deficits, such as autism spectrum disorder (ASD) and psychopathy. Indeed, the described techniques can be applied to diagnose and track progress of complex spectrum mental disorders such as ASD.

In another example, detecting behaviorally-relevant aspects of social synchrony can help create non-invasive biofeedback interventions to improve social interactions. In clinical contexts, this example can help patients with impaired social abilities achieve more typical social interactions (especially in the case of autism). In non-clinical contexts, this example can be used in corporate and professional settings to assess and train employees on their interactions. The described techniques can help customer service representatives or executives learn to show empathy and seem more trustworthy or help people in negotiations learn how to tailor their facial movements to make their opponents trust them more thoroughly.

In yet another example, detecting outcome-relevant aspects of social synchrony can help monitor telehealth appointments to give clinicians targeted feedback about how to tailor their social interactions to make their patients trust them more thoroughly (which, in turn, has been shown to dramatically improve health outcomes and treatment adherence, as well as pain levels and surgery recovery).

In yet another example, detecting outcome-relevant aspects of social synchrony can help monitor therapy sessions to give therapists targeted feedback about how to tailor their facial responses to make their patients trust them more thoroughly and feel more connected (which, in turn, has been shown to lead to better mental health outcomes).

In additional examples, detecting outcome-relevant and behaviorally-relevant aspects of social synchrony can help create empathic and trustworthy social robots and virtual reality and augmented reality characters that people prefer to engage with. Indeed, the described techniques can be utilized in robotics and artificial intelligence to train/design social robots to be more human-like in their interactions with humans and make them more trustworthy and engaging.

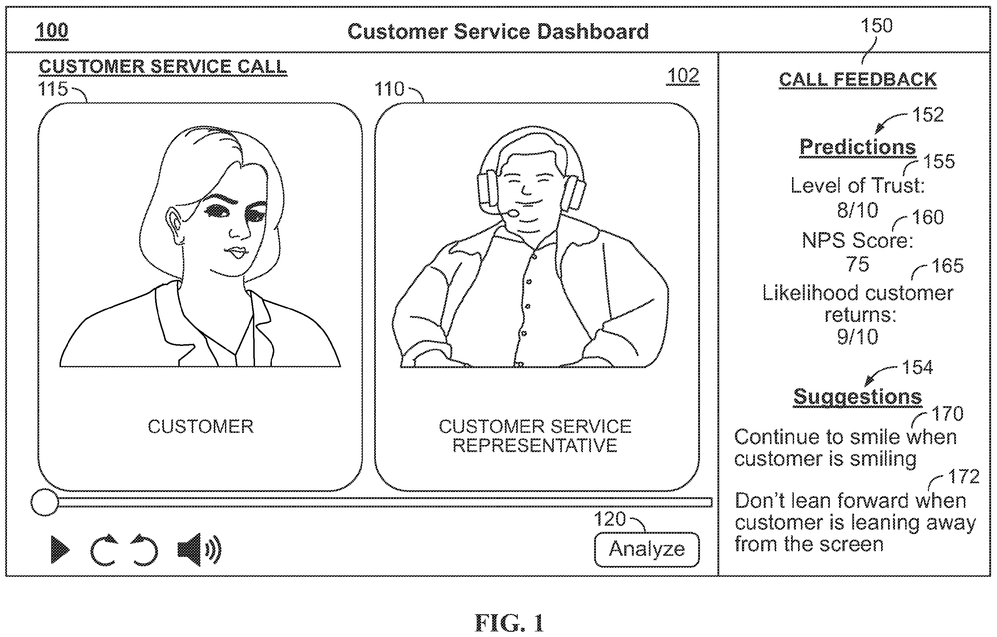

Figure 1 illustrates a snapshot of an example graphical user interface displaying notifications associated with a level of social synchrony between participants of a social interaction according to certain embodiments of the invention. As discussed above, the described techniques can be used in corporate and professional settings to assess and train employees on their social interactions. For example, the described techniques can help customer service representatives or executives learn to convey empathy and seem more trustworthy or help people in negotiations learn how to tailor their facial movements and sounds to make their opponents trust them more thoroughly.

Referring to Figure 1, a user may open a customer service dashboard 100 for an application on their computing device. The computing device may be any computing device such as, but not limited to, a personal computer, a reader, a mobile device, a personal digital assistant, a wearable computer, a smart phone, a tablet, a laptop computer (notebook or netbook), a gaming device or console, an entertainment device, a hybrid computer, a desktop computer, a smart television, or an electronic whiteboard or large form-factor touchscreen.

In the illustrative example of Figure 1, through a video pane **102** of the dashboard **100,** a customer service representative (shown in window **110)** can conduct a virtual call with a customer (shown in window **115).** During the virtual call, social interactions between the customer service representative and the customer can be recorded. Once the virtual call is completed, the customer service representative can request the video recording of the virtual call to be analyzed for social synchrony measurements by selecting a command (e.g., analyze command **120).**

For the social synchrony measurements, features are extracted from both the customer service representative and the customer and analyzed to determine a level of social synchrony between them. As previously described, the features can include facial expressions and actions; facial action units (AUs); posture; eye contact; body movement; head pose; emotional indicators such as flushing and eye dilation; voice characteristics such as voice tone, cadence, and volume level; biometric signals, such as heart rate, respiration rate, blood pressure, and body temperature; brain activity; and many other time-based relational actions or responses between the customer service representative and the customer.

The level of social synchrony can include an individual social synchrony level, an overall social synchrony level, and a prediction target-specific overall social synchrony level.

The customer service representative can be provided a detailed report of their social synchrony in feedback pane **150.** The feedback pane **150** can display notifications associated with the determined level of social synchrony between the customer service representative and the customer. The notification can include a prediction that uses the social synchrony of the features (individual social synchrony level) or an overall social synchrony measurement (e.g., overall social synchrony level or prediction target-specific social synchrony level).

Based on the determined level of social synchrony, a variety of predictions and feedback suggestions can be made. For example, a prediction that uses social synchrony measurements can be made as to how much the customer trusts the representative, or what the final Net Promoter Score^{®} (NPS) of the entire interaction between the customer service representative and the customer will be, or what is the likelihood that the customer will return. As another example, targeted feedback can be made about the social synchrony of individual features (ex: make sure to smile when your partner smiles) based on the individual social synchrony levels found to be behaviorally-relevant, trait-relevant, or outcome-relevant.

The predictions and feedback can be displayed to the customer service representative as notifications, and the notifications can be used to improve customer service interactions by the customer service representative.

In the illustrative example of Figure 1, the feedback pane **150** includes a prediction section **152** and a suggestions section **154.** Here, the customer service representative and the customer have a high overall social synchrony level. The predictions section **152** includes predictions for a level of trust **155** of "8/10", an NPS score **160** of "75", and a likelihood customer will return **165** of "9/10". The suggestions section **154** includes suggestion **170** "Continue to smile when customer is smiling" and suggestion **172** "Don't lean forward when customer is leaning away from the screen". Suggestion **170** and suggestion **172** are examples of targeted feedback for behaviors of one participant in relation to the other participant.

It should be noted that the virtual call can be analyzed for social synchrony assessment while the virtual call is taking place. In this case, the notifications associated with the level of social synchrony between the customer service representative and the customer can be provided and displayed in real time or near real time.

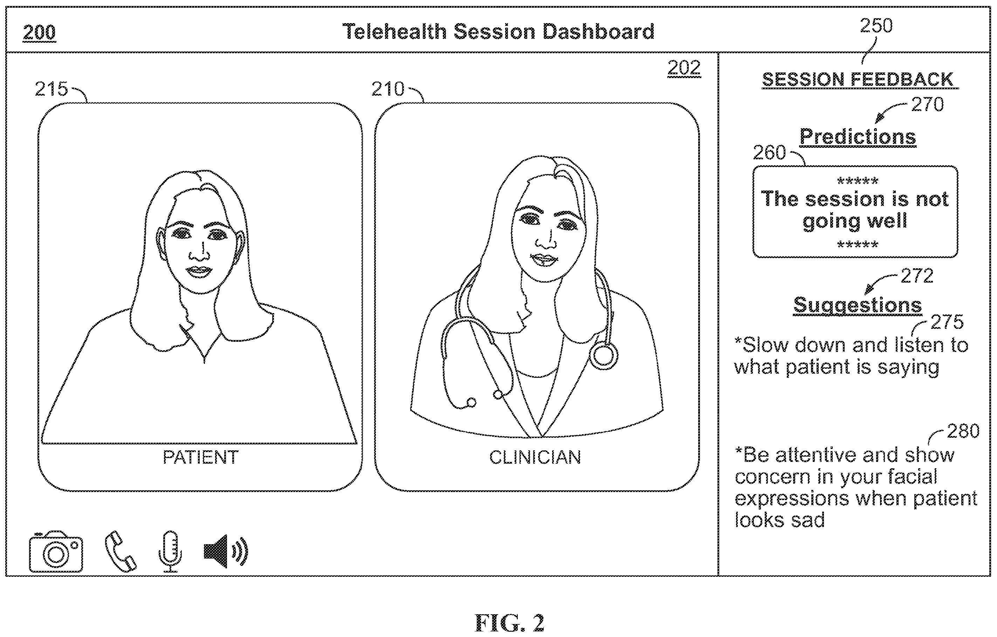

Figure 2 illustrates a snapshot of an example graphical user interface displaying notifications associated with a level of social synchrony between participants of a social interaction according to certain embodiments of the invention. As previously discussed, the described techniques can help monitor telehealth appointments to give clinicians targeted feedback about how to tailor their social interactions to make their patients trust them more thoroughly and feel more connected (which, in turn, has been shown to dramatically improve health outcomes and treatment adherence, as well as pain levels).

Referring to Figure 2, a user may open a telehealth session dashboard 200 for an application on their computing device. The computing device may be any computing device such as, but not limited to, a personal computer, a reader, a mobile device, a personal digital assistant, a wearable computer, a smart phone, a tablet, a laptop computer (notebook or netbook), a gaming device or console, an entertainment device, a hybrid computer, a desktop computer, a smart television, or an electronic whiteboard or large form-factor touchscreen.

In the illustrative example of Figure 2, through a video pane **202** of the dashboard **200,** a clinician (shown in window **210)** can conduct a virtual telehealth session with a patient (shown in window **215).** During the virtual telehealth session, social interactions between the clinician and the patient can be analyzed for a social synchrony measurement in order for feedback to be provided to the clinician in real time.

For the social synchrony measurement, features are extracted from both the clinician and the patient and analyzed to determine a level of social synchrony between them. As previously described, the features can include, but are not limited to, facial expressions and actions; facial action units (AUs); posture; eye contact; body movement; head pose; emotional indicators such as flushing and eye dilation; voice characteristics such as voice tone, cadence, and volume level; biometric signals, such as heart rate, respiration rate, blood pressure, and body temperature; brain activity; and other time-based relational actions or responses between the clinician and the patient. The level of social synchrony can include an individual social synchrony level, an overall social synchrony level, and a prediction target-specific overall social synchrony level.

The clinician can be provided real time feedback based on their social synchrony in feedback pane **250.** The feedback pane **250** can display notifications associated with the determined level of social synchrony between the clinician and the patient. The notification can include a prediction that uses the social synchrony of the features (individual social synchrony level) or an overall social synchrony measurement (e.g., overall social synchrony level or prediction target-specific social synchrony level).

In the illustrative example of Figure 2, real time predictions and feedback for the clinician are provided in the feedback pane **250.** Here, the clinician and the patient have a low overall social synchrony level and, based on the low overall social synchrony level, a notification **260** is displayed indicating "The session is not going well" in a predictions section **270.** A suggestions section **272** is provided to help the clinician tailor their social interactions to improve the outcome of the telehealth session. The suggestions section **272** includes a suggestion **275** of "Slow down and listen to what the patient is saying" and a suggestion **280** of "Be attentive and show concern in your facial expressions when patient looks sad".

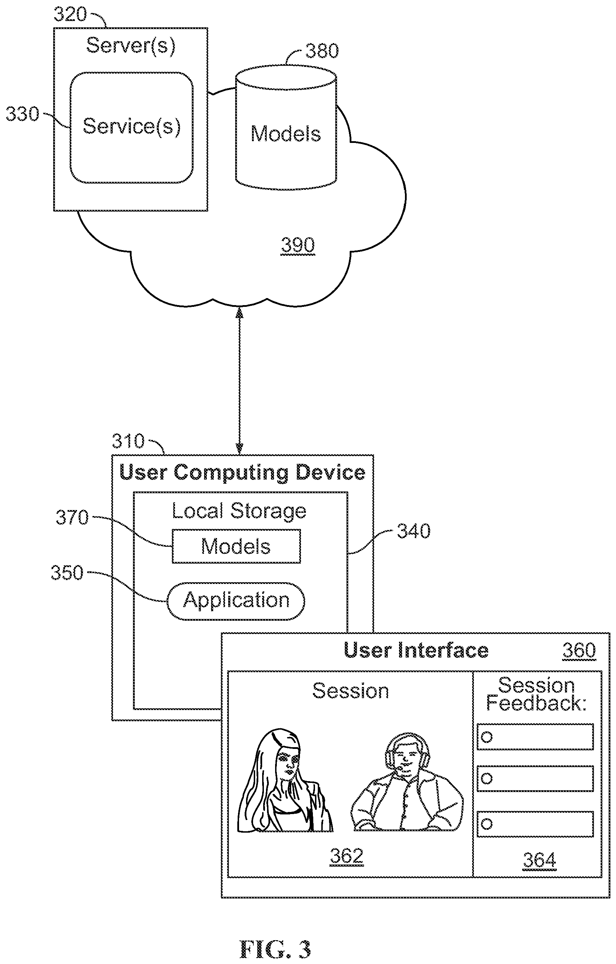

Figure 3 illustrates an example operating environment in which various embodiments of the invention may be practiced. Referring to Figure 3, an example operating environment can include a user computing device **310** and a server **320** implementing a social synchrony services **330.**

User computing device (e.g., user computing device **310)** may be a computing device such as, but not limited to, a personal computer, a reader, a mobile device, a personal digital assistant, a wearable computer, a smart phone, a tablet, a laptop computer (notebook or netbook), a gaming device or console, an entertainment device, a hybrid computer, a desktop computer, a smart television, or an electronic whiteboard or large form-factor touchscreen.

User computing device (e.g., user computing device **310)** includes, among other components, a local storage **340** on which an application **350** may be stored. The application **350** may be an application with a social synchrony tool or may be a web browser or front-end application that accesses the application with the social synchrony tool over the Internet or other network. In some cases, application **350** includes a graphical user interface **360** that can provide a window **362** in which a social interaction can be performed and recorded and a pane or window **364** (or contextual menu or other suitable interface) providing notifications associated with a level of social synchrony. Application **350** may be, but is not limited to, a word processing application, email or other message application, whiteboard or notebook application, a team collaboration application (e.g., MICROSOFT TEAMS, SLACK), or video conferencing application. Although reference is made to an "application", it should be understood that the application, such as application **350** can have varying scope of functionality. That is, the application can be a stand-alone application or an add-in or feature of a stand-alone application.

The example operating environment can support an offline implementation, as well as an online implementation. In the offline scenario, a user may directly or indirectly (e.g., by being in a social synchrony mode or by issuing an audio command to perform automated social synchrony measurements) select a recording of a social interaction displayed in the user interface **360.** The social synchrony tool (e.g., as part of application **350)** can use a set of models **370** stored in the local storage **340** to generate a level of social synchrony. The models **370** may be provided as part of the social synchrony tool and, depending on the robustness of the computing device **310** may be a 'lighter' version (e.g., may have fewer feature sets) than models available at a server.

In the online scenario, a user may directly or indirectly select a recording of a social interaction displayed in the user interface **360.** The social synchrony tool (e.g., as part of application **350)** can communicate with the server **320** providing social synchrony services **330** that use one or more models **380** to generate a level of social synchrony. The level of social synchrony can include an individual social synchrony level, an overall social synchrony level, and a prediction target-specific overall social synchrony level. The level of social synchrony can be a value, such as a number between 0 and 1, or a word, such as "high" or "low", which can indicate the likelihood for each of the two participants to mimic the movements of the other.

Components (computing systems, storage resources, and the like) in the operating environment may operate on or in communication with each other over a network **390.** The network **390** can be, but is not limited to, a cellular network (e.g., wireless phone), a point-to-point dial up connection, a satellite network, the Internet, a local area network (LAN), a wide area network (WAN), a WiFi network, an ad hoc network or a combination thereof. Such networks are widely used to connect various types of network elements, such as hubs, bridges, routers, switches, servers, and gateways. The network **390** may include one or more connected networks (e.g., a multi-network environment) including public networks, such as the Internet, and/or private networks such as a secure enterprise private network. Access to the network **390** may be provided via one or more wired or wireless access networks as will be understood by those skilled in the art.

As will also be appreciated by those skilled in the art, communication networks can take several different forms and can use several different communication protocols. Certain embodiments of the invention can be practiced in distributed-computing environments where tasks are performed by remote-processing devices that are linked through a network. In a distributed-computing environment, program modules can be located in both local and remote computer-readable storage media.

Communication to and from the components may be carried out, in some cases, via application programming interfaces (APIs). An API is an interface implemented by a program code component or hardware component (hereinafter "API-implementing component") that allows a different program code component or hardware component (hereinafter "API-calling component") to access and use one or more functions, methods, procedures, data structures, classes, and/or other services provided by the API-implementing component. An API can define one or more parameters that are passed between the API-calling component and the API-implementing component. The API is generally a set of programming instructions and standards for enabling two or more applications to communicate with each other and is commonly implemented over the Internet as a set of Hypertext Transfer Protocol (HTTP) request messages and a specified format or structure for response messages according to a REST (Representational state transfer) or SOAP (Simple Object Access Protocol) architecture.

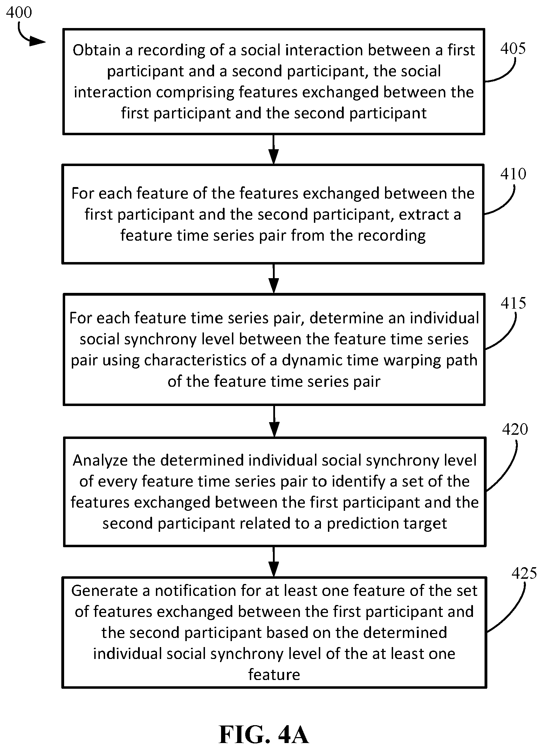

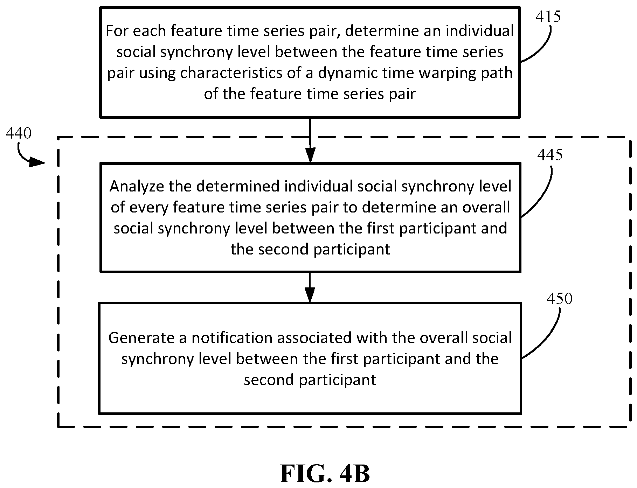

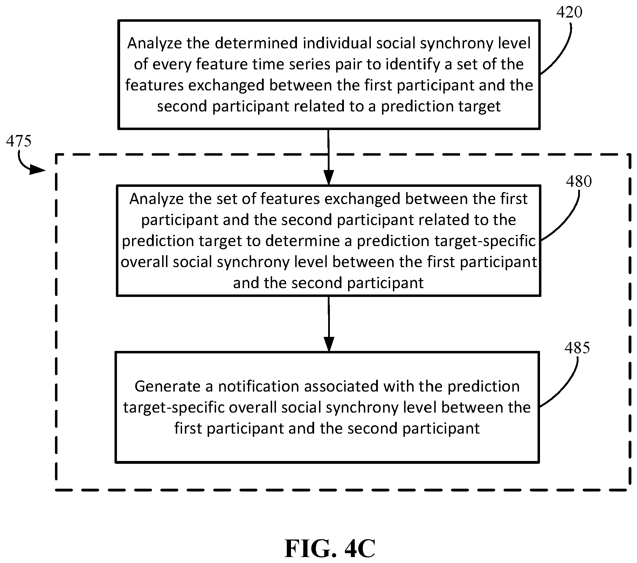

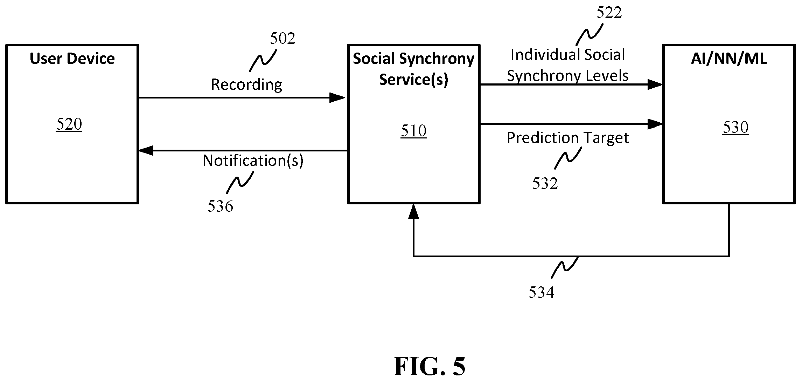

Figures 4A-4C illustrates example processes for providing automated social synchrony measurements according to certain embodiments of the invention. Some or all of process **400** of Figure 4A, process **440** of Figure 4B, and process **475** of Figure 4C may be executed at, for example, server **320** as part of services **330** (e.g., server **320** may include instructions to perform processes **400, 440,** and **475).** In some cases, processes **400, 440,** and **475** may be executed entirely at computing device **310,** for example, as an offline version (e.g., computing device **310** may include instructions to perform process **400).** In some cases, processes **400, 440,** and **475** may be executed at computing device **310** while in communication with server **320** to support the determination of a level of social synchrony (as discussed in more detail with respect to Figure 5).

Referring to Figure 4A, process **400** can include receiving **(405)** a recording of a social interaction between a first participant and a second participant. It should be noted that process **400** can be performed during or after the recording of the social interaction. The recording can comprise any suitable type of media or recording combination that records all participants in real time, such as a video recording, an audio recording, and a biosensor recording.

A video recording includes a view of each participant's face and upper body. The participants can either be together in the same geographical location or interacting remotely over a visual media (e.g., Zoom, Skype, FaceTime, etc.). As the video is recorded, participants are allowed or instructed to converse naturally in a period of free interaction. An audio recording can be a recording of pairs of people interacting, for example, at call centers or in therapy sessions. Biosensor recordings can be recorded through multimodal biosensors attached to people interacting, such as through wireless-enabled wearable technology, physical fitness monitors and activity trackers including smartwatches, pedometers and monitors for heart rate, quality of sleep and stairs climbed, as well as related software. The recording can also be a recording from other sensors providing gesture recognition and body skeletal detection, such as depth and motion sensors.

The social interaction between the two participants can be any suitable social interaction including, but not limited to, interaction during a customer service call, interaction during a clinical session, a learning environment interaction, a social robot interaction, and a virtual reality and augmented reality interaction. For example, a clinical session can include a telehealth session; a therapy session; and assessments for traumatic brain injuries, psychiatric disorders, neurological diseases and other diseases characterized by social communication deficits, such as autism. In the case of a clinical session, one example of the two participants of the social interaction can be a patient and a doctor or therapist. Another example of the two participants can include two patients, such as two patients in couple's therapy. Yet another example of the two participants can include a patient and a caretaker, for example when trying to diagnose a social communication disorder.

The social interaction between the participants includes features exchanged between the first participant and the second participant. These social interactions are dynamic and can change directionality and cadence, and can occur differently for different types of movements.

Some examples of the features include, but are not limited to, facial expressions and actions; facial action units (AUs); posture; eye contact; body movement; head pose; emotional indicators such as flushing and eye dilation; voice characteristics such as voice tone, cadence, and volume level; biometric signals, such as heart rate, respiration rate, blood pressure, and body temperature; brain activity; and many other features that will be evident to a person of skill in the art. As previously described, facial AUs refer to minimal units of facial activity that are anatomically separate and visually distinguishable. Examples of AUs include a lip stretch, a lip corner, a lip tighten, a lip raise, a lip part, a lip pull, a nose wrinkle, a jaw drop, a chin raise, a dimple, a cheek raise, a brow lower, an inner brow, an outer brow, a lid tighten, a lid raise, and a blink. Emotional expressions comprise multiple AUs working in tandem to different degrees in different people. In the example embodiments described herein, the feature set comprises facial AUs. However, it is within the scope of the disclosure to include any of the aforementioned or other relevant features.

As previously described, social synchrony indicates the extent to which two people are coordinated objectively and subjectively over time. Since some features (e.g., AUs) inform about the facial movement of the participants, social synchrony may be reflected, to some extent, in a similarity between features (e.g., AUs) of both participants. For example, the first participant may slowly and unconsciously follow the head pose of the second participant while the second participant may simultaneously find themselves smiling immediately after they see the first participant smile. Indeed, a smile from the first participant can trigger a delayed but synchronized reaction in the second participant, visible through the activation of the AU called Cheek Raise.

For each feature of the features exchanged between the first participant and the second participant, the process **400** further includes extracting **(410),** from the recording, a feature time series pair comprising a first time series of the first participant and a second time series of the second participant.

In cases where the recording is a video recording, for each feature, extracting **(410)** the feature time series pair can include extracting the feature from each frame of the video recording for the first participant to generate a first frame-by-frame index of the feature; and extracting the feature from each frame of the video recording for the second participant to generate a second frame-by-frame index of the feature. Here, the first frame-by-frame index of the feature is the first time series of the first participant and the second frame-by-frame index of the feature is the second time series of the second participant.

The feature time series pair can be any suitable mapping of two similar features. In some cases, the feature time series pair can be mixed modalities. For example, the modality for the features for the first participant can include head motions and facial AUs extracted from a video recording and in the other participant, the modality for the features may be the posture received from depth and motion sensors.

The process **400** further includes, for each feature time series pair, determining **(415)** an individual social synchrony level between the feature time series pair using characteristics of a dynamic time warping path. An example of the characteristics of the dynamic time warping path can include a deviation from a diagonal of the derivative dynamic time warping path of the feature time series pair.

An individual social synchrony level is determined for each pair of feature times series separately. The individual social synchrony level assesses a social synchrony, or overall temporal coordination, between the feature time series pair. The individual social synchrony level is determined using a dynamic time warping (DTW) procedure that allows for dynamic and bidirectional time intervals. In particular, a median distance of the warping path from the diagonal (DTW MDD) is used, which focuses on the warping path.

The individual social synchrony level is a direct measurement of social synchrony within a given pair of features. In some cases, the individual social synchrony level can include associated characteristics of the dynamic time warping path, such as measurements of consistency and variance, which can be packaged into measures like confidence in the individual social synchrony level.

In some cases, optional process **440,** as will be described in Figure 4B, is included after operation **415.**

The process **400** further includes analyzing **(420)** the determined individual social synchrony level of every feature time series pair to identify a set of the features exchanged between the first participant and the second participant related to a chosen prediction target.

Chosen behaviors, traits, or outcomes can include, for example, reported trust, leadership success, learning achievements, likeability reports, negotiation results, or customer service skills. Additionally, unlike conventional approaches to measuring social synchrony, the described process **400** simultaneously analyzes social synchrony for multiple types of possible features (i.e., conventional social synchrony methods are univariate, and the present method is multivariate). The disclosed method advantageously also allows a user to identify which features in a social scene are important for a given prediction target. Not only can the described process **400** assess the relevance of multiple social synchrony measurements at once; the process **400** identifies which ones are relevant in a transparent and interpretable way Process **400** is also completely automated once launched and does not require any further human input, intervention, judgement, or prompts to determine **(420)** the level of social synchrony.

The determined individual social synchrony level for all the feature time series pairs can be analyzed simultaneously using a social synchrony prediction engine to identify the set of the features exchanged between the first participant and the second participant related to the prediction target. That is, social synchrony is computed between each time series pair of features individually and combined into multivariate models simultaneously.

The social synchrony prediction engine evaluates the features for relevancy as a social synchrony predictor for the prediction target, and a prediction result is provided. The social synchrony prediction engine also outputs the set of the features exchanged between the first participant and the second participant related to the prediction target.

The set of features whose social synchrony is related to or predicts one prediction target can be different than the set of features whose social synchrony is related to or predicts a second prediction target. Indeed, a first set of the features exchanged between the first participant and the second participant related to a first prediction target is different than a second set of the features exchanged between the first participant and the second participant related to a second prediction target.

As an example, a set of features whose social synchrony predicts the degree of trust between two people can be different than a set of features whose social synchrony is useful for predicting autism diagnoses. Process **400** can therefore be easily adapted to measure many different kinds of social synchrony and predict many types of behaviors, traits, or outcomes, as long as the behaviors, traits, or outcomes can be measured, and those behavior, trait, or outcome measures are extractable from the feature set or data being examined. Process **400** is capable of autonomously determining which set of the features have social synchrony that is relevant to one or more types of prediction targets (behaviors, traits, or outcomes). In a non-limiting example, if 100 features are extracted from a video session, process **400** can determine which set of the 100 features is relevant to trust between the participants, and which different set of the 100 features is relevant for predicting autism diagnoses in the participants.

In some cases, optional process **475,** as will be described in Figure 4C, is included after operation **420.**

The process **400** can generate **(425)** a notification for at least one feature of the set of the features exchanged between the first participant and the second participant related to the prediction target based on the determined individual social synchrony level of the feature.

The level of social synchrony can be used to determine helpful feedback to improve social interactions between the participants. The feedback can be provided as the notifications associated with the level of social synchrony. The notification can include a prediction that uses the social synchrony of the features (the determined individual social synchrony level).

The notification associated with the level of social synchrony between the first participant and the second participant can be provided to the computing device of the first participant or the computing device of the second participant. In some cases, the notification associated with the level of social synchrony between the first participant and the second participant can be provided to a third party who wants to monitor the interactions, such as a hospital department dashboard that reports the quality of all telehealth interactions.

In some cases, the features included in the set of the features exchanged between the first participant and the second participant related to the prediction target can also be provided along with the notification. Providing the features along with the notification allows a participant to identify which aspects of social synchrony in a social scene are important for a given prediction target.

Referring to Figure 4B, process **440** can be performed after operation **415,** as described with respect to Figure 4A. Process **440** can include analyzing **(445)** the determined individual social synchrony level of every feature time series pair to determine an overall social synchrony level between the first participant and the second participant. Analyzing **(445)** the determined individual social synchrony level of every feature time series pair can include combining each of the determined individual social synchrony level of every feature time series pair to generate the overall social synchrony level between the first participant and the second participant.

Process **440** can further include generating **(450)** a notification associated with the overall social synchrony level between the first participant and the second participant. Notifications associated with the overall social synchrony level notifications such as "You do not seem to be connecting with your partner well" and "Your patient is not resonating with you well. Consider asking them what you can do to understand their perspective better."

Referring to Figure 4C, process **475** can be performed after operation **420,** as described with respect to Figure 4A. Process **475** can include analyzing **(480)** the identified set of the features exchanged between the first participant and the second participant related to the prediction target to determine a prediction target-specific overall social synchrony level between the first participant and the second participant.

The identified set of the features can be analyzed using a social synchrony prediction engine and a prediction output is provided. The prediction output can include at least two components. The first component of the prediction output is the prediction for the prediction target (behavior, trait, or outcome). The second component of the prediction output is a prediction target-specific overall social synchrony level that leverages the analyses and predictive models of the social synchrony prediction engine. The social synchrony prediction engine can identify sets of features whose social synchrony between the first participant and the second participant are relevant for the prediction target, and learns what statistical weights those social synchrony features contribute to the predictions. The prediction target-specific overall social synchrony level can be a combination of the individual social synchrony levels of the identified prediction target-specific social synchrony feature sets, weighted by the statistical weights the social synchrony features contribute to the predictions.

Process **440** can further include generating **(485)** a notification associated with the prediction target-specific overall social synchrony level between the first participant and the second participant.

The notification associated with the prediction target-specific overall social synchrony level can include a prediction related to a prediction target, such as a diagnosis, behavior, trait, or other outcome. For example, in the case where a diagnosis-specific overall social synchrony level is determined, the notification generated can include diagnosis-specific prediction, such as "High risk of autism".

Figure 5 illustrates an example implementation of automated social synchrony measurements. Referring to Figure 5, a recording of a social interaction between a first participant and a second participant can be received at social synchrony service(s) **510.** The recording **502** can be captured via a computing device **520** such as described with respect to computing device **310** and user interface **360** of Figure 3. Aspects of social synchrony service(s) **510** may themselves be carried out on computing device **520** and/or may be performed at a server such as server **320** described with respect to Figure 3.

The extraction of features by social synchrony service(s) **510** may include, but are not limited to, facial expressions and actions; facial action units (AUs); posture; eye contact; body movement; head pose; emotional indicators such as flushing and eye dilation; voice characteristics such as voice tone, cadence, and volume level; biometric signals, such as heart rate, respiration rate, blood pressure, and body temperature; brain activity; and other time-based relational actions or responses between subjects. An individual social synchrony level can be determined for each time series pair of the extracted features. Any determined individual social synchrony levels **522** may be communicated to a social synchrony prediction engine **530,** which may be a neural network or other machine learning or artificial intelligence engine, for generating a prediction output. The prediction output can include the prediction itself, as well as the list of prediction target-specific features (e.g., behaviorally-relevant, trait-relevant, or outcome-relevant features), characteristics about the relevance of each of these features, and a prediction target-specific overall social synchrony level.

The social synchrony service(s) **510** provides the prediction target to be predicted **532** to the social synchrony prediction engine **530.** The social synchrony prediction engine **530** determines which subset of individual features have social synchrony useful for predicting prediction target **532,** how to use those social synchrony features for the most accurate prediction, and generates the prediction itself. Results **534** of the analysis at the social synchrony prediction engine **530** can be returned to the social synchrony service(s) **510,** which can generate notifications **536** associated with the prediction output determined by the social synchrony prediction engine **530.** The social synchrony service(s) **510** can generate one or more notifications and provide the one or more of the notifications **536** to the computing device **520** for display.

In some cases, the prediction target **532** is received at the social synchrony service **510,** along with the recording **502.** In some cases, the prediction target **532** is predefined. For example, in a telehealth scenario, prediction target **532** may be "reported trust" or "perceived empathy". In a corporate scenario, prediction target **532** may be "leadership potential" or prediction target **532** may be "negotiation success".

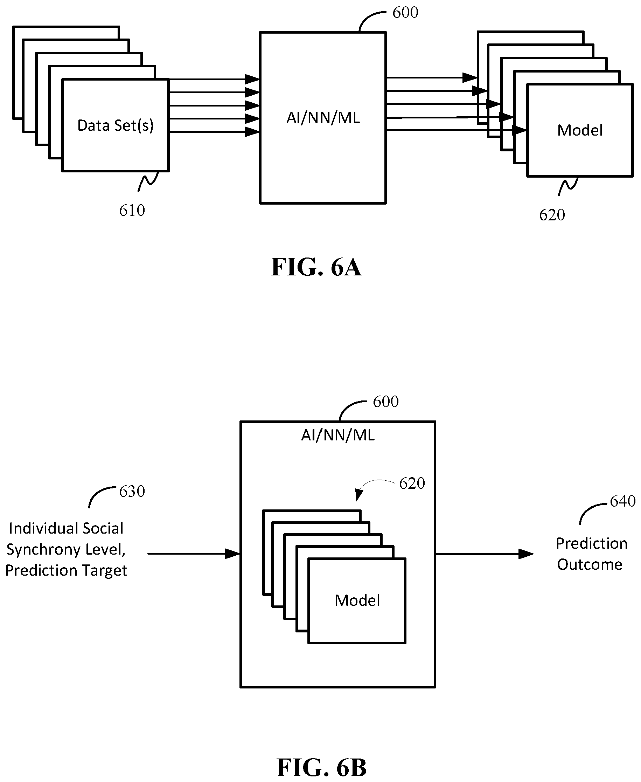

Figures 6A and 6B illustrate an example social synchrony engine, where Figure 6A shows a process flow for generating models and Figure 6B shows a process flow for operation. Turning first to Figure 6A, a social synchrony prediction engine **600** may be trained on various sets of data **610** to generate appropriate models **620.**

The social synchrony prediction engine **600** may continuously receive additional sets of data **610,** which may be processed to update the models **620.** As previously described, in some cases, the models **620** can be stored locally, for example, as an offline version. In some of such cases, the models **620** may continue to be updated locally.

The models **620** may include such models generated using any suitable neural network, machine learning, or other artificial intelligence process. It should be understood that the methods of predicting behaviors, traits, or outcomes based on multivariate social synchrony measurements and, in some cases, identifying which specific types of social synchrony predict those behaviors, traits, or outcomes include, but are not limited to, hierarchical and non-hierarchical Bayesian methods; supervised learning methods such as logistic regression (e.g., Elastic Net regression), Support vector Machines, neural nets, bagged/boosted or randomized decision trees, and k-nearest neighbor; and unsupervised methods such as k-means clustering and agglomerative clustering. In some cases, other methods for clustering data in combination with computed auxiliary features may be used by the social synchrony prediction engine **600** as appropriate.

Turning to Figure 6B, the models may be mapped to particular behaviors, traits, or outcomes such that when features and a particular prediction target **(630)** are provided to the social synchrony engine **600,** the appropriate model(s) **620** can be selected to produce a prediction output **640.** The prediction output **640** can include the prediction itself, as well as the list of prediction target-specific features, such as behaviorally-relevant, trait-relevant, or outcome-relevant features (such as also described with respect to Figure 5), characteristics about the relevance of each of these features, and a prediction target-specific overall social synchrony level.

Examples of the prediction can include a prediction of "high trust", "moderate empathy, "4 on a scale of 1 to 10 representing how likely team members are to feel confident in the person's leadership", "will win negotiation", etc.

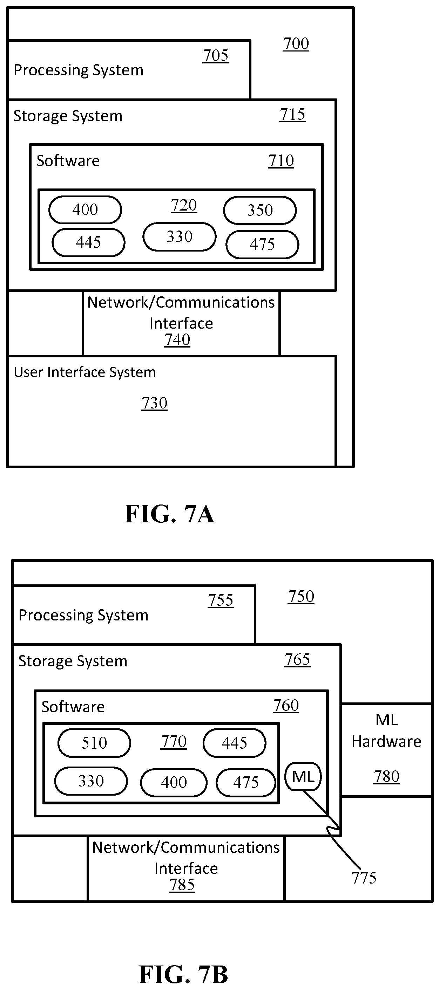

Figures 7A and 7B illustrate components of example computing systems that may carry out the described processes. Referring to Figure 7A, system **700** may represent a computing device such as, but not limited to, a personal computer, a reader, a mobile device, a personal digital assistant, a wearable computer, a smart phone, a tablet, a laptop computer (notebook or netbook), a gaming device or console, an entertainment device, a hybrid computer, a desktop computer, a smart television, or an electronic whiteboard or large form-factor touchscreen. Accordingly, more or fewer elements described with respect to system **700** may be incorporated to implement a particular computing device. Referring to Figure 7B, system **750** may be implemented within a single computing device or distributed across multiple computing devices or sub-systems that cooperate in executing program instructions. Accordingly, more or fewer elements described with respect to system **750** may be incorporated to implement a particular system. The system **750** can include one or more blade server devices, standalone server devices, personal computers, routers, hubs, switches, bridges, firewall devices, intrusion detection devices, mainframe computers, network-attached storage devices, and other types of computing devices.

In embodiments where the system **750** includes multiple computing devices, the server can include one or more communications networks that facilitate communication among the computing devices. For example, the one or more communications networks can include a local or wide area network that facilitates communication among the computing devices. One or more direct communication links can be included between the computing devices. In addition, in some cases, the computing devices can be installed at geographically distributed locations. In other cases, the multiple computing devices can be installed at a single geographic location, such as a server farm or an office.

Systems **700** and **750** can include processing systems **705, 755** of one or more processors to transform or manipulate data according to the instructions of software **710, 760** stored on a storage system **715, 765.** Examples of processors of the processing systems **705, 755** include general purpose central processing units (CPUs), graphics processing units (GPUs), field programmable gate arrays (FPGAs), application specific processors, and logic devices, as well as any other type of processing device, combinations, or variations thereof.

The software **710** can include an operating system and application programs **720,** including application **350** and/or services **330,** as described with respect to Figure 3 (and in some cases aspects of service(s) **510** such as described with respect to Figure 5). In some cases, application **720** can perform some or all of process **400** as described with respect to Figure 4A, process **445** as described with respect to Figure 4B, and process **475** as described with respect to Figure 4C.

Software **760** can include an operating system and application programs **770,** including services **330** as described with respect to Figure 3 and services **510** such as described with respect to Figure 5; and application **770** may perform some or all of process **400** as described with respect to Figure 4A, process **445** as described with respect to Figure 4B, and process **475** as described with respect to Figure 4C. In some cases, software **760** includes instructions **775** supporting machine learning or other implementation of a social synchrony engine such as described with respect to Figures 5, 6A and 6B. In some cases, system **750** can include or communicate with machine learning hardware **780** to instantiate a social synchrony engine.

In some cases, models (e.g., models **370, 380, 620)** may be stored in storage system **715, 765.**

Storage systems **715, 765** may comprise any suitable computer readable storage media. Storage system **715, 765** may include volatile and nonvolatile memories, removable and non-removable media implemented in any method or technology for storage of information, such as computer readable instructions, data structures, program modules, or other data. Examples of storage media of storage system **715, 765** include random access memory, read only memory, magnetic disks, optical disks, CDs, DVDs, flash memory, magnetic cassettes, magnetic tape, magnetic disk storage or other magnetic storage devices, or any other suitable storage media. In no case do storage media consist of transitory, propagating signals.

Storage system **715, 765** may be implemented as a single storage device but may also be implemented across multiple storage devices or sub-systems co-located or distributed relative to each other. Storage system **715, 765** may include additional elements, such as a controller, capable of communicating with processing system **705, 755.**

System **700** can further include user interface system **730,** which may include input/output (I/O) devices and components that enable communication between a user and the system **700.** User interface system **730** can include input devices such as a mouse, track pad, keyboard, a touch device for receiving a touch gesture from a user, a motion input device for detecting non-touch gestures and other motions by a user, a microphone for detecting speech, and other types of input devices and their associated processing elements capable of receiving user input.

The user interface system **730** may also include output devices such as display screen(s), speakers, haptic devices for tactile feedback, and other types of output devices. In certain cases, the input and output devices may be combined in a single device, such as a touchscreen display which both depicts images and receives touch gesture input from the user.

A natural user interface (NUI) may be included as part of the user interface system **730** for a user to input selections, commands, and other requests, as well as to input content. Examples of NUI methods include those relying on speech recognition, touch and stylus recognition, gesture recognition both on screen and adjacent to the screen, air gestures, head and eye tracking, voice and speech, vision, touch, hover, gestures, and machine intelligence. Accordingly, the systems described herein may include touch sensitive displays, voice and speech recognition, intention and goal understanding, motion gesture detection using depth cameras (such as stereoscopic or time-of-flight camera systems, infrared camera systems, red-green-blue (RGB) camera systems and combinations of these), motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods).

Visual output may be depicted on a display in myriad ways, presenting graphical user interface elements, text, images, video, notifications, virtual buttons, virtual keyboards, or any other type of information capable of being depicted in visual form.

The user interface system **730** may also include user interface software and associated software (e.g., for graphics chips and input devices) executed by the OS in support of the various user input and output devices. The associated software assists the OS in communicating user interface hardware events to application programs using defined mechanisms. The user interface system **730** including user interface software may support a graphical user interface, a natural user interface, or any other type of user interface.

Network interface **740, 785** may include communications connections and devices that allow for communication with other computing systems over one or more communication networks (not shown). Examples of connections and devices that together allow for inter-system communication may include network interface cards, antennas, power amplifiers, RF circuitry, transceivers, and other communication circuitry. The connections and devices may communicate over communication media (such as metal, glass, air, or any other suitable communication media) to exchange communications with other computing systems or networks of systems. Transmissions to and from the communications interface are controlled by the OS, which informs applications of communications events when necessary.

Alternatively, or in addition, the functionality, methods and processes described herein can be implemented, at least in part, by one or more hardware modules (or logic components). For example, the hardware modules can include, but are not limited to, application-specific integrated circuit (ASIC) chips, field programmable gate arrays (FPGAs), system-on-a-chip (SoC) systems, complex programmable logic devices (CPLDs) and other programmable logic devices now known or later developed. When the hardware modules are activated, the hardware modules perform the functionality, methods and processes included within the hardware modules.

Certain Embodiments may be implemented as a computer process, a computing system, or as an article of manufacture, such as a computer program product or computer-readable storage medium. Certain methods and processes described herein can be embodied as software, code and/or data, which may be stored on one or more storage media. Certain embodiments of the invention contemplate the use of a machine in the form of a computer system within which a set of instructions, when executed by hardware of the computer system (e.g., a processor or processing system), can cause the system to perform any one or more of the methodologies discussed above. Certain computer program products may be one or more computer-readable storage media readable by a computer system (and executable by a processing system) and encoding a computer program of instructions for executing a computer process. It should be understood that as used herein, in no case do the terms "storage media", "computer-readable storage media" or "computer-readable storage medium" consist of transitory carrier waves or propagating signals.

### Theoretical Support

To provide theoretical support of the described techniques, a social synchrony algorithm was applied in a controlled environment where qualitative measures of trust have been established.

### II. DATA COLLECTION

### A. Overall Description

Videos were recorded of two people in separate geographic locations interacting via Skype. Each pair was given approximately three minutes to interact freely, and were told they should use that time to get to know each other. Research assistants set up the session, but then left the room during this free-interaction phase. After approximately three minutes had passed, the research assistants returned to the room to open the Trust Game virtual interface (described below). The research assistants then left the room again so that the participants were alone when they played each other in the Trust Game and filled out questionnaires. 135 pairs of videos were collected in total. The goal was to predict the outcome of the Trust Game using our assessment of each pair's social synchrony during the free interaction period.

### B. Trust Game

In the Trust Game, "H" (Head player) was given a dollar and given the opportunity to give $0, $0.20, $0.40, $0.60, $0.80, or $1 of that dollar to "T" (Tail player). H was told that the amount they choose to give to T will be tripled before it is delivered. After T made their choice and the tripled amount was delivered, T was then given the opportunity to return to H as much as they want of the money they received. The outcome of the game depends on H's trust and T's trustworthiness: to maximize earnings for both players, H would give T $1 and trust that T would return more than $1 of their earnings, and T would be trustworthy and follow- through with returning some of their earnings. H and T roles were randomly assigned to the participants who are paired through the virtual interface.

### C. Facial Action Units

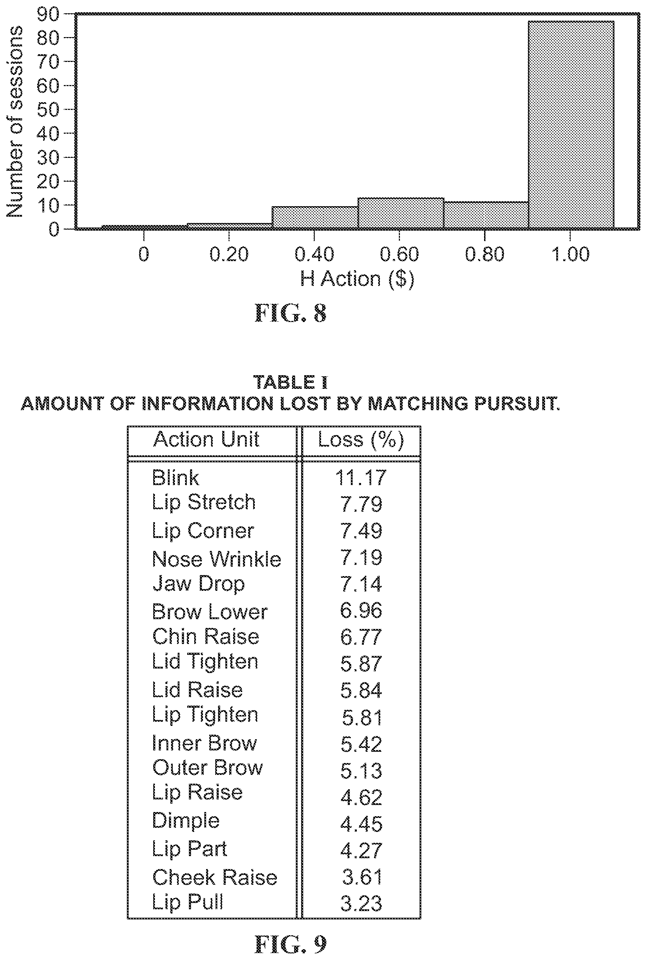

Humans innately and spontaneously assess others' trustworthiness when they see them, and a dominant psychological theory proposes that signals from the way others' emotional expressions unfold over time are used to make these judgments. Empirical evidence indicates that dynamic facial features play a more dominant role in our trustworthiness judgments than static facial features and non-facial nonverbal cues like gestures or body posture. Therefore, in this illustrative example, analysis was focused on the facial features that comprise players' dynamic emotional expressions. In particular, facial action units (AUs) were selected to analyze instead of emotional categories, per se. AUs are well-validated "minimal units of facial activity that are anatomically separate and visually distinguishable", such as lid raises or nose wrinkles. Emotional expressions are comprised of multiple AUs working in tandem to different degrees in different people. Automatic AU-detection is thought to be both more ecologically valid and more reliable than automatic emotion detection. The open-source deep-neural-network (DNN) OpenFace was used to extract the intensity (from zero to five) of the 17 AUs listed in Table 1 of Figure 9 in each frame of each video in a pair of interactions. OpenFace also provides a confidence measure associated with each of its classifications, which was used in pre-processing.

### III. PROCEDURE

### A. Notations

Let *K_{AU}* denote the number of action units (here, *K_{AU} =* 17). The index *k* ∈ {1, *..., K_{AU}*} will specifically denote the kth action unit in the order introduced in the list of section II. Let *Nₓₚ* denote the number of sessions. The index n ∈ {1, ..., *Nₓₚ*} will specifically denote the nth session. Let *Mₙ* denote the number of frames contained in the pair of video recordings of the natural interaction stage of the nth session. For a given session, let *i* ∈ {1,2} arbitrarily identify the two subjects in a considered pair. The signal measuring the kth action unit of the subject #*i* of the nth session will therefore be denoted by ${x}_{k , n}^{\left(i\right)} ∈ {ℝ}^{{M}_{n}}$. Its mth sample is denoted by ${x}_{k , n}^{\left(i\right)} \left[m\right]$. The whole AUs dataset is thus comprised of $2 {K}_{AU} {\sum }_{n = 1}^{{N}_{xp}} {M}_{n}$ samples. As detailed in section IV-A, the variable chosen to predict was a binarization of the H's choice in the Trust Game. This binary variable is denoted by y[n].

### B. Session Exclusions

The confidence score ${c}_{n}^{\left(i\right)} ∈ {ℝ}^{{M}_{n}}$ provided by OpenFace is a frame-by-frame index that indicates the model's confidence in the reported AU classification on a scale from 0 to 1. The overall quality of the sessions in terms of facial landmark detection is assessed through the evolution over time of the worst confidence score given by

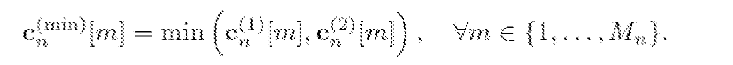

Sessions where the worst confidence score ${c}_{n}^{\left(min\right)}$ is below a given threshold *τ* for more than 30% of the frames in at least one of the videos of a pair were excluded to reduce the impact of poor AU feature detection on the social synchrony assessments. In practice, the inventors set *τ* = 0:7, which resulted in twelve sessions being excluded. The rest of the analyses were performed on the remaining dataset of 123 sessions.

### C. Step 1: Video Preprocessing

*1) Smoothing:* The OpenFace model sometimes fails to detect all facial landmarks or AUs accurately, particularly when a participant turns their head too quickly or puts their hand in front of their face. Although these events are typically brief, they may lead to dramatic differences in OpenFace's output for a few frames, resulting in artificial fast variations in the AU time courses. To prevent these artificial spikes and valleys from disproportionately influencing subsequent steps, the AU time series was smoothed. Let ${{x}^{˜}}_{k , n}^{\left(i\right)}$ denote the smoothed version of the AU signal ${x}_{k , n}^{\left(i\right)}$. In practice, the smoothing is obtained via a moving average of the signal, that is: 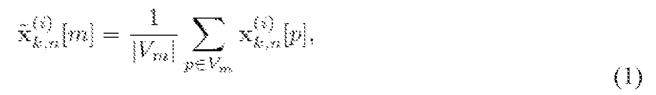 where ${V}_{m} = \left\{m-{d}_{n}^{\left(i\right)}\left[m\right],…,m+{d}_{n}^{\left(i\right)}\left[m\right]\right\} ∩ \left\{1,…,{M}_{n}\right\} .$

Here, ${d}_{n}^{\left(i\right)} \left[m\right]$ denotes the smoothing half-width. This quantity is adjusted according to the OpenFace confidence score ${c}_{n}^{\left(i\right)}$. Thus, the smaller ${c}_{n}^{\left(i\right)} \left[m\right]$ is, the larger ${d}_{n}^{\left(i\right)} \left[m\right]$ is chosen. In practice, the dependence is linear: ${d}_{n}^{\left(i\right)} \left[m\right] = \left⌊{d}_{max}-\left({d}_{max}-1\right){c}_{n}^{\left(i\right)}\left[m\right]\right⌋$ (2) where $\left⌊.\right⌋$ denotes the floor function, and *d*ₘₐₓ is the maximal permitted smoothing half-width. *d*ₘₐₓ is automatically chosen within the set $\left\{1,…, \left⌊{M}_{n}\right⌋\right\}$ as the optimal smoothing half-width which, when applying the corresponding smoothing to the confidence score itself, gives the smoothed confidence score with the most frames above the threshold *τ*.

*2) Optional: Imputation of low-confidence frames:* In addition to the smoothing step, the result of a subsequent preprocessing step that imputed AU values in frames where OpenFace's confidence estimate was less than the chosen value of *τ* were assessed. The idea was that imputation might result in an AU value for that frame that was more representative of ground truth than OpenFace's output of low confidence, which in turn could lead to better social synchrony assessments. In principle, several imputation strategies could be applied. In the illustrative example, a simple linear imputation method was chosen. Assume that ${{x}^{˜}}_{k , n}^{\left(i\right)} \left[m\right]$ has to be imputed from sample *m*₁ to sample *m*₂. On this segment, the values of the signal are replaced with the linear imputation given by the following reassignment: ${{x}^{˜}}_{k , n}^{\left(i\right)} \left[m\right] ← {{x}^{˜}}_{k , n}^{\left(i\right)} \left[{m}_{1}-1\right] + \frac{m - {m}_{1} = 1}{{m}_{2} - {m}_{1} + 2} \left({{x}^{˜}}_{k , n}^{\left(i\right)}\left[{m}_{2}+1\right]-{{x}^{˜}}_{k , n}^{\left(i\right)}\left[{m}_{1}-1\right]\right)$ (3)

*3) Matching Pursuit:* Visual inspection and statistical exploration of the AU time courses indicated that most AU time courses were sparse. In other words, AUs are typically active for short periods of time, and the peaks of activity during these times tend to have characteristic shapes specific to each AU. High-frequency and low-amplitude changes typically represent model noise or incomplete facial movements. To increase the signal to noise ratio of the AU time series, the matching pursuit technique was used to remove uninformative weak variations in the signal while preserving the most characteristic peaks. Matching pursuit optimally decomposes a given signal into a dictionary of basis functions using a minimal number of elements belonging to this dictionary, called atoms. The dictionary used to decompose the signals of the nth experiment is comprised of the following functions:
The Gaussian window, ${g}_{μ , σ} \left[m\right] = exp \left(\frac{- 1}{2 {σ}^{2}}{\left(m-μ\right)}^{2}\right) ,$ (4) where *µ* ∈ {1, ..., *Mₙ*}, σ ∈ {σ₀*,* ..., *σₛ*};
the Mexican hat wavelet, ${w}_{μ , σ} \left[m\right] = \left.{\left(1-\frac{- 1}{{σ}^{2}}\left(m-μ\right)\right)}^{2}\right) {g}_{μ , σ} \left[m\right] ,$ (5) where *µ* ∈ {1, ...,*Mₙ*},σ ∈ {σ₀, ...,*σₛ*}.

The dictionary thus contains 2*Mₙ*S elements. The standard matching pursuit algorithm was implemented. Let ${\hat{x}}_{k , n}^{\left(i\right)}$ denote the output of the matching pursuit algorithm applied to the smoothed signal ${{x}^{˜}}_{k , n}^{\left(i\right)}$. Then, ${\hat{x}}_{k , n}^{\left(i\right)}$ is the projection of ${{x}^{˜}}_{k , n}^{\left(i\right)}$ onto a finite number Q « 2*Mₙ*S of atoms that minimizes the squared distance ${\left‖{\hat{x}}_{k , n}^{\left(i\right)}-{{x}^{˜}}_{k , n}^{\left(i\right)}\right‖}^{2}$.

### D. Step 2: Compute Social Synchrony

The goal of this step was to assess social synchrony, or overall temporal coordination, between AU time series pairs. In this example, a new detection procedure is described based on DTW and its extensions. DTW estimates the function of local time shifts that minimizes the overall misfit between time series. It does not assume any kind of stationarity in signals. The DTW warping function describes how to shrink and stretch individual parts of each time series so that the resulting signals are maximally aligned. By construction, ordinary DTW seeks an alignment (*u_{k,n}*, [*t*], *v*_{*k*,*n*}, [t])_{t∈{1,...,*T*}} of both signals ${\hat{x}}_{k , n}^{\left(1\right)}$ and ${\hat{x}}_{k , n}^{\left(2\right)}$ that minimizes the following function:

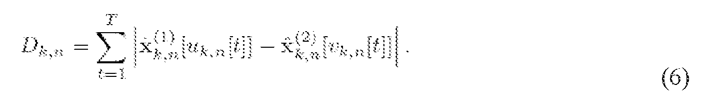

Additional constraints on the warping path (*u_{k,n},* [*t*], *v_{k,n}*,[*t*])_{t∈{1,...,*T*}} are applied to prevent the alignment from rewinding the signals and require that no sample of both signals can be omitted. In mathematical terms, these constraints read ${u}_{k , n} \left[t\right] \leq {u}_{k , n} \left[t+1\right] , {v}_{k , n} \left[t\right] \leq {v}_{k , n} \left[t+1\right]$ (7) ${u}_{k , n} \left[1\right] = {v}_{k , n} \left[1\right] = 1 , {u}_{k , n} \left[T\right] = {v}_{k , n} \left[T\right] = {M}_{n}$ (8)

Since the concept of social synchrony is believed to be more related to the coordinated timing of movements than the coordination of the magnitude of movements (as discussed earlier), a version of DTW called derivative DTW (DDTW) was implemented. Rather than working on the raw time series, DDTW estimates the function of local time shifts that minimizes the overall misfit between the derivatives of a pair of time series. The functional result is that the alignment is based more on the shapes of the time series than on the absolute magnitudes of the time series. An added benefit is that DDTW is more resilient than DTW to "singularities", or instances where a single point from one time series is mapped onto a large subsection of the other time series in an unintuitive manner.

The typical way similarity between two signals is assessed using DTW is to examine the DTW distance, or *D_{k,n}* in (6), which is the sum of the distances between corresponding points of the optimally warped time series. Of note, although *D*_{*k*,*n*} is often referred to as a distance, it does not meet the mathematical definition of a distance because it does not guarantee the triangle inequality to hold. When the DTW distance is used in the present study, it is normalized by the session's duration; that is, by the ratio *D_{k,n}*/*Mₙ.* However, social synchrony may be better assessed through characteristics of the DTW warping path than by the DTW distance. This is based on the aforementioned idea that behaviorally-relevant social synchrony is believed to be more about the coordinated timing of movements than exact mimicry of movements. The DTW distance provides information that is heavily impacted by how different the shapes of AU activity bouts are between two individuals. The DTW path, on the other hand, provides information primarily about how much shifting in time is needed to optimally align bouts of AU activity that are similar. Thus, the DTW path should be more relevant to "the temporal linkage of nonverbal behavior" than the DTW distance. In this example, the inventors focused specifically on the warping path's median deviation from the diagonal (WP-meddev). This quantity, denoted ${z}_{n} ∈ {ℝ}^{{K}_{AU}}$, reads

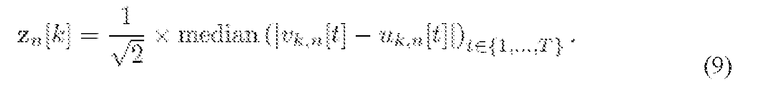

The intuition behind this novel feature is that when two time series are closely aligned in time, the warping function will be close to the diagonal and the warping function's median distance from the diagonal across an entire session will be short. When two series are not well-coordinated in time, much more warping will be required to optimally align them and the warping functions will have dramatic deviations from the diagonal more frequently. The inventors hypothesized that WP-meddev would be a better representation of social synchrony than the DTW distance, and therefore would also more useful for predicting trusting behavior than the DTW distance.

### E. Step 3: Prediction

Given that a critical goal of this research is to develop a procedure that can select which of many highly-correlated social synchrony inputs are behaviorally-relevant in an interpretable way, elastic net penalized regression was elected to be used as the prediction strategy for relating DTW features to H's choices in the Trust Game. Penalized regression methods, as a class, are robust in settings where a large number of features are examined relative to the number of data points. Lasso and Elastic Net regression are two penalized strategies that are also effective at feature selection. Lasso and Elastic Net regression impose sparsity on the feature set, and features that are retained in their models can be interpreted straightforwardly as being informative for predicting the outcome measure. One issue with Lasso regression, though, is that when multiple features are both correlated with each other (as AUs are known to be) and correlated with the outcome variable, Lasso regression will randomly select only one of the correlated features to be retained in its models. Elastic Net, on the other hand, combines the lasso and ridge penalty functions so that it retains the set of features within correlated groups that maximize model performance, while still imposing enough sparsity to prevent overfitting. Its characteristics are therefore ideal for the present setting. Let D denote the deviance of the binomial logistic regression. Recall the regression problem: $\left(\hat{β}, {\hat{β}}_{0}\right) = arg {min}_{\begin{matrix}β ∈ {ℝ}^{{K}_{AU}} \\ {β}_{0} ∈ ℝ\end{matrix}} {\sum }_{n = 1}^{{N}_{xp}} D \left(y\left[n\right],β{z}_{n}+{β}_{0}\right) + λ \left(\frac{1 - α}{2}{\left‖β\right‖}_{2}^{2}+α{\left‖β\right‖}_{1}\right) ,$ (10) where *λ* > 0, and α ∈ [0,1] are hyperparameters. In the numerical experiments, the hyperparameters *λ* and α are optimally chosen through a grid search in order to maximize the accuracy of the predictor.

### IV. RESULTS

### A. Trust Game Outcomes

Since the goal was to identify the social synchrony related to trust (as opposed to trustworthiness), focus was solely on the H player's actions. The distribution of Hs' actions was very unbalanced, as illustrated by the histogram in Figure 8. Figure 8 illustrates a histogram of H actions. Referring to Figure 8, most participants chose to give the full $1, only one participant chose to give $0, and comparatively few participants chose to give $0.20, $0.40, $0.60, or $0.80. Due to the statistical challenges of predicting such unbalanced classes, in all subsequent analyses behavior in the Trust Game was treated as a binary variable where class 0 is associated with H's choices ranging from $0 through $0.80 and trust class 1 is associated with H's choices of $1.

### B. Step 1: Matching Pursuit Preprocessing

The smoothing and matching pursuit steps described in section III-C.1 and section III-C.3 of the illustrative example were performed on all 17 AU signals. The number of selected atoms was set to Q = 25 per signal. The atom shapes are described in section III-C.3, where σ{2¹, ..., 2⁵}. Let ${\hat{x}}_{k , n}^{\left(i\right)}$ denote the preprocessed version of the original signal ${x}_{k , n}^{\left(i\right)}$. The measure of the relative amount of information lost in this step is determined by 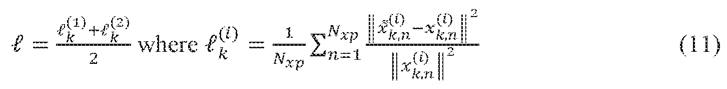 for all *k* ∈ {1, ..., *K*_{AU}}. Figure 9 shows Table I illustrating an amount of information lost by matching pursuit. Referring to Figure 9, Table 1 shows the loss quantity ℓ*ₖ* for the AUs that are available through OpenFace. In the illustrative example, matching Pursuit was able to recover most of the information in the AU time courses, with no information loss exceeding 11.19%. In the illustrative example, the greatest information loss was from the blink signal time course, perhaps because it had more overall variability than other AUs that were more sparse.

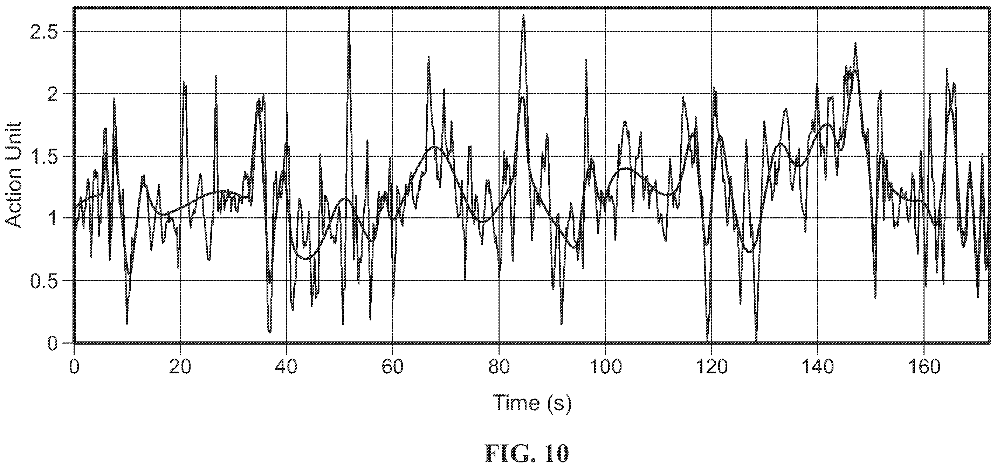

Figure 10 depicts an example of a "Brow Lower" AU signal reconstructed after the combined operations of smoothing and matching pursuit. Referring to Figure 10, the reconstructed signal from step 1 is plotted in the darker color, while the original raw signal is in the lighter color. Matching Pursuit retains the most significant variations in the time series while removing small, random fluctuations.

### C. Step 2: Dynamic Time Warping

The inventors hypothesized that DDTW would be better suited for assessing social synchrony than the ordinary DTW for the reasons described in section III-D of the illustrative example, but both kinds of DTW were performed for comparison. A threshold Θ > 0 was set on the maximal time lag admissible to align signals, i.e., |*uₜ* - *vₜ*| ≤ Θ/*f*ₛ (this reflects the maximum amount of time one might expect peaks of activity in one partner's AU time series to be represented in the time series of the other partner). Since previous social synchrony studies analyze time lags of up to 5 sec [4], Θ was set to 5s for the primary analyses.

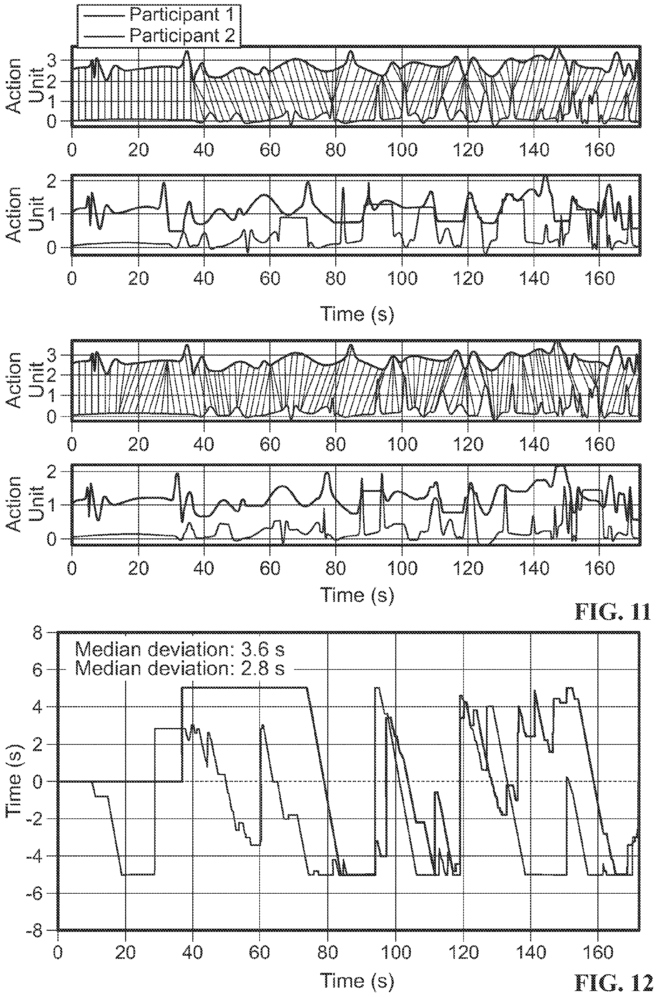

Figure 11 shows an example pair of AUs aligned by DTW vs. DDTW. Referring to Figure 11, the top two panels show the output of the DTW algorithm, while the bottom two panels show the output of the DDTW algorithm. In the first and third panels, black lines indicate which time points from the two time series are aligned by the algorithm's optimal warping path. The second and fourth panels illustrate the result of warping the signals by the shifts indicated by the optimal warping path. The benefits of DDTW are apparent in the illustrative example. DDTW avoids the types of unrealistic alignments produced by DTW where one point within a peak of one signal is matched to a segment of the other signal that is stretched into a uniform flat segment inappropriately (see segments between 20-40s and 80-100s for examples). Figure 12 shows the deviation from the diagonal of the warping paths obtained via DDTW vs DTW, and the associated values of WP-meddev. Referring to Figure 12, the grayish areas depict the constraints imposed by the choice of Θ. Departures from the diagonal indicate alignments of samples initially distant in time (see the segment between 80-100s, for example).

### D. Step 3: Prediction Procedure

The ability of multivariate social synchrony was evaluated, as measured by univariate AU's median deviation from the diagonal of the DDTW's warping path (WP-meddev), to predict the outcome of the Trust Game. Even with the binary transformation of H's behavior detailed in section IV-A of the illustrative example, trust behavior represented by the variable y remained imbalanced. The number of sessions belonging to trust class 0 was *N*₀ = 36, while the number of sessions belonging to trust class 1 was *N*₁ = 87. To perform the prediction, the overrepresented class was randomly subsampled so that only 36 sessions belonging to the trust class 1 were retained. The total number of sessions included in the subsequent prediction analyses were therefore 72, equally balanced between trust behavior classes 0 and 1.

In the illustrative example, the prediction problem was solved via the Elastic Net procedure introduced in section III-E as follows. The data set was partitioned into five subsamples. The parameters (*β̂*,*β̂*₀) were learned from a training set (about 58 sessions) comprised of four subsamples, and then tested by predicting the Trust Game outcomes in the testing set (about 14 sessions) comprised of the fifth subsample. This was repeated with different subsamplings of trust class 1 until each session had been considered at least 50 times.

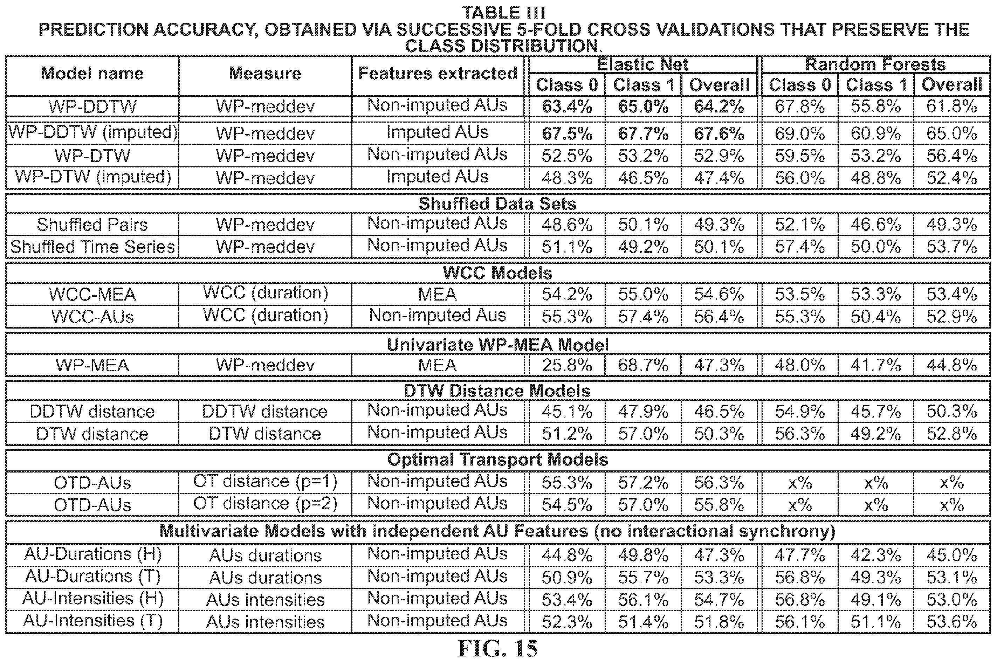

The above procedure was run on a grid of possible values for the Elastic Net model's hyperparameters *λ* and α. Values of *λ*= 0.0518 and α = 0.802 maximized the accuracy of the models applied to the non-imputed data, and were therefore used for all subsequent analyses. Figure 15 shows Table III, which illustrates prediction accuracy, obtained via successive 5-fold cross validations that preserve the class distribution. Referring to Figure 15, Table III illustrates how often the models based on WP-meddev (indicated by "WP" in the table) correctly predicted the outcome of the Trust Game when applied to the non-imputed AU signals or the AU signals whose low-confidence frames were linearly imputed (see section III-C.2 of the illustrative example). The accuracy rate of WP-meddev models were 63.4-67.7%, compared to the 50% that would be expected by chance. These of the illustrative example results indicate that social synchrony between AUs is indeed informative for predicting trust.

To ensure the WP-meddev measure represents biologically meaningful signal, WP-meddev was computed for two control data sets:
1) *Shuffled pairs.* In this data set, the videos were randomly shuffled so that each H player video was paired with another video from a session of the same trust class, but where the paired partners did not actually interact with each other over Skype. Any synchrony between these videos would be due to chance rather than due to natural synchrony between interacting partners.
*2) Shuffled time series.* All video pairs from the same session were divided into 10-second intervals, and these 10-second intervals were randomly shuffled. The same shuffling was applied to all AU time series. If WP-meddev tracks true temporal coordination between AU time series, the shuffling procedure should disrupt the accurate assessment of social synchrony.

In the illustrative example, the accuracy of the WP-meddev prediction models using these two control data sets was even worse than chance (see Table III of Figure 15). This confirms that the WP-meddev social synchrony measure tracks real dynamics between interacting human partners rather than just the type of coincidental temporal coordination that can be expected from any random pair of time series.

Next, the predictive utility of WP-meddev was assessed compared to other features that might be extracted from social interaction videos. The most common conventional method for assessing social synchrony is univariate and uses MEA of the head region and WCC. Thus, the inventors began by comparing the predictive utility of WP-meddev to this MEA WCC-duration method (WCC-UV, where "UV" represents univariate).As shown in Table III of Figure 15, WCC-UV leads to an accuracy of around 55%, which is better than chance, but also worse than the WP method. To determine whether the reduction in prediction accuracy is due to the measure used to assess social synchrony or, instead, due to treating the entire head region as a single feature, two additional analyses were run. The first analysis used the multivariate elastic net procedure described above with the AU time courses, but used WCC instead of WP to assess social synchrony (WCC-AUs). The second analysis examined the univariate relationship between the MEA time series and trust, but used WP-meddev instead of WCC to assess social synchrony (WP-MEA). As shown in Table III of Figure 15, in the illustrative example, the multivariate WP model outperformed the WCC-AUs model, confirming that WP-meddev is a more informative social synchrony measure than WCC in this context. In the illustrative example, the multivariate WP model also outperformed the WP-MEA model, indicating that examining more fine grained social synchrony between AUs is more informative for predicting trust than examining social synchrony between movement in the head region as a whole.

Another type of feature that could be extracted from the video pairs is the DTW distance between each AU pair, which is often treated as a measure of similarity. As discussed in III-D of the illustrative example, the DTW distance is the sum of the normalized Euclidean distances between corresponding points of the optimally warped time series, and is a fundamentally different measure than the WP-meddev measure that was introduced. In illustration of these differences, the Pearson correlation coefficient between the DTW/DDTW distances and WP-meddev measures of all AU pairs in the current data set is 0:24 (p < :001) and -0:19 (p < :001), respectively. This indicates the relationship is not only small, but in the case of DDTW, also in the negative direction. One elastic net model was run using the DTW distance of AU pairs as features and another using the DDTW distance of AU pairs as features (both were normalized by the duration of the session). In the illustrative example, the accuracy of both models was poor, and in the case of the DDTW distance, was even worse than chance. This confirmed the prediction that the WP-meddev social synchrony measure would be more behaviorally-relevant than traditional DTW distance measures.

The predictive utility of another measure of similarity that has gained popularity in the machine learning literature, the optimum transport distance, was tested. Optimum transport approaches calculate the cost of moving one distribution of data to another, taking spatial proximity into account. The optimum transport approaches cannot assess the temporal coordination between two time series because they treat each time point as a member of a collection of time points where chronological order is ignored. However, they do provide an effective way of assessing the similarity of the magnitudes of two time-series, even when similar magnitudes are shifted in time. In the illustrative example, the elastic net models using the optimum transport distances between AU pairs as features performed similarly to MEA-WCC models. Both types of models predicted trust much less successfully than WP-meddev models, providing converging evidence that the temporal coordination between AUs plays a unique role in predicting trust, beyond information provided by coordination of AU magnitudes.

In order to test whether WP-meddev social synchrony features were more informative for predicting trust than features of the multivariate AU time series from each player considered independently, the inventors examined the performance of models that used the duration of AU features demonstrated by the H and T players as features (AU durations in Table III of Figure 15), and models that used the average intensity of the H and T players' AUs across a session as features (AU intensities in Table III of Figure 15). These features are similar to what previous studies trying to predict trust using automatic visual feature detection have used. The duration of an AU was defined by the proportion of time the AU was detected as visible (AU intensity > 1) in the H or T player, considered separately. As shown in Table III of Figure 15, the AU-Durations models and AU-Intensities models underperformed relative to most of the social synchrony models. In the illustrative example, the AU-Intensities model from the H player had the best performance of the four, but was still much less accurate than the WP-DDTW models. This confirms that extracting information about how the facial features of a pair of people interact with each other over time is generally more helpful for predicting trust than extracting information about the people's facial features considered independently from one another.

Finally, the performance of all the elastic net models designed were compared to the accuracy of a random forest model using the same features and behavioral labels. Random forest algorithms are robust and, unlike elastic net regression, do not assume linear relationships between variables which can sometimes lead them to outperform regression approaches. Despite this general trend, the elastic net procedure always outperformed the random forest models in the present scenarios shown in Table III of Figure 15. Especially when combined with the fact that random forest algorithms do not provide straightforward methods for feature selection, this suggests the elastic net strategy is better suited for understanding what specific types of social synchrony predict trust or other types of behaviors of interest. That said, the fact that the performance of both algorithms was fairly similar suggests that the relatively modest 60-65% accuracy rate of the models likely reflects an imperfect relationship between social synchrony predictors and trust more than an unsuitable modeling strategy or inappropriate statistical assumptions.

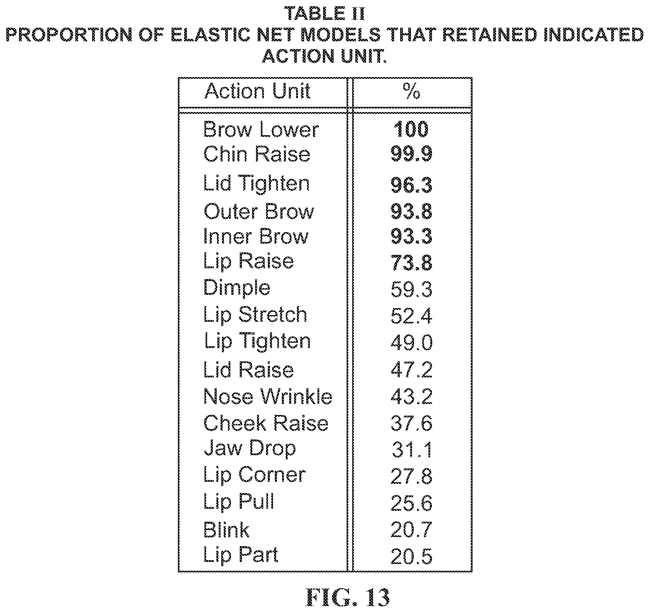

Figure 13 shows Table II illustrating a proportion of elastic net models that retained indicated action unit. Referring to Figure 13, to leverage the feature selection provided by the elastic net models, Table II describes the proportion of Elastic Net models where the specified AU was retained in the model. In others words, it displays the percent of experiments where the estimated parameter vector *β̂* for the specified AU was nonzero. In the illustrative example, the AUs that were selected by the procedure more frequently than the other AUs are the most informative for predicting the outcome of the Trust Game. It is notable that four of the six AUs that were selected by more than 70% of the models are eye-related-Brow Lower, Lid Tighten, Outer Brow and Inner Brow (Blink and Lid Raise are the only eye-related AUs that are not selected regularly).

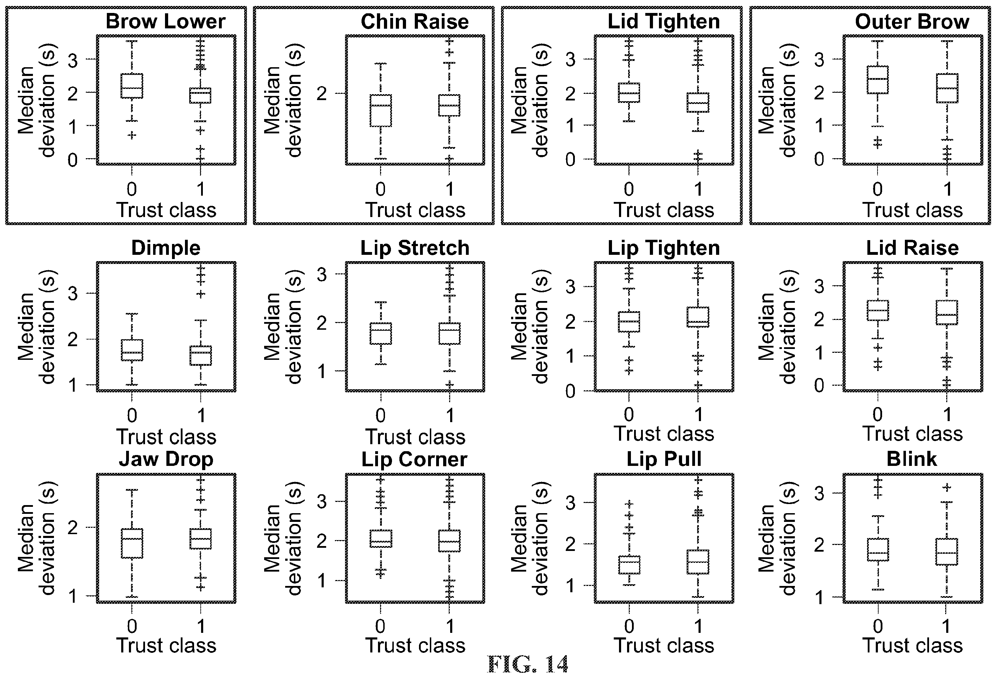

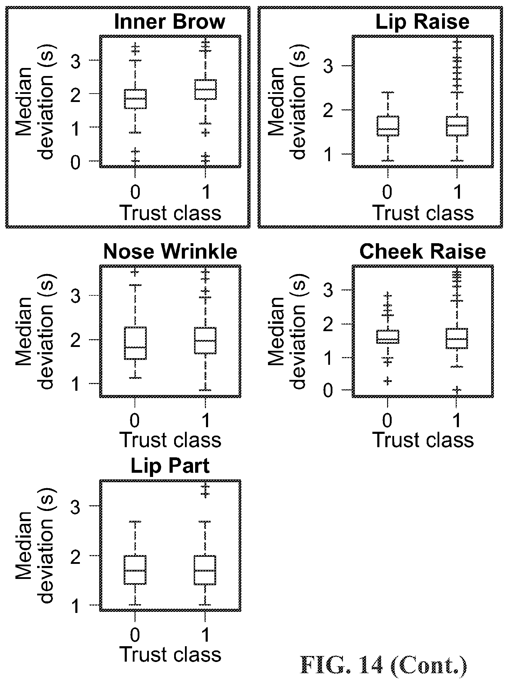

Figure 14 displays box plots of each AU's WP-meddev social synchrony (median deviation from the diagonal of the DDTW warping path), according to the outcome of the Trust Game. Referring to Figure 14, the AUs that are the more often selected by the elastic net algorithm (i.e., in more that 70% of the experiments) are outlined. As might be expected, AUs with greater social synchrony differences between the two trust classes were more likely to be selected in the illustrative example.

### V. CONCLUSION

In the illustrative example, it was demonstrated that automatic analysis of social synchrony during unconstrained social interactions can be used to predict how much one person from the interaction will trust the other in a subsequent Trust Game. The described procedure allows researchers to identify which social synchrony features from a multivariate data set are behaviorally relevant. Three overarching conclusions can be drawn from this illustrative example. First, detecting and analyzing the temporal interactions between people provides unique insight into social behavior that cannot be gleaned by analyzing actions from interacting partners in isolation. Second, the median deviation of DDTW warping paths may be a more effective way of studying these interactions than any other interaction measure previously described. Third, multivariate approaches to studying social synchrony may be more fruitful than univariate approaches.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the appended claims.

## Claims

1. A method for automated social synchrony measurements comprising:
receiving a recording of a social interaction between a first participant and a second participant, the social interaction comprising features exchanged between the first participant and the second participant;
for each feature of the features exchanged between the first participant and the second participant, extracting, from the recording, a feature time series pair comprising a first time series of the first participant and a second time series of the second participant;
for each feature time series pair, determining an individual social synchrony level between the feature time series pair using characteristics of a dynamic time warping path of the feature time series pair;
analyzing the determined individual social synchrony level of every feature time series pair to identify a set of the features exchanged between the first participant and the second participant related to a prediction target; and
generating a notification for at least one feature of the set of the features exchanged between the first participant and the second participant related to the prediction target based on the determined individual social synchrony level of the at least one feature.

2. The method of claim 1, wherein analyzing the determined individual social synchrony level of every feature time series pair to identify a set of the features exchanged between the first participant and the second participant related to the prediction target comprises:
analyzing the determined individual social synchrony level of all feature time series pairs using a social synchrony prediction engine to identify the set of the features exchanged between the first participant and the second participant related to the prediction target,
wherein the social synchrony prediction engine comprises a neural network, a machine learning engine, or an artificial intelligence engine.

3. The method of claim 1, further comprising:
analyzing the determined individual social synchrony level of every feature time series pair to determine an overall social synchrony level between the first participant and the second participant; and
generating a notification associated with the overall social synchrony level between the first participant and the second participant.

4. The method of claim 1, further comprising:
analyzing the identified set of the features exchanged between the first participant and the second participant related to the prediction target using a social synchrony prediction engine to determine a prediction target-specific overall social synchrony level between the first participant and the second participant; and
generating a notification associated with the prediction target-specific overall social synchrony level between the first participant and the second participant.

5. The method of claim 1, wherein the recording is a video recording,
wherein extracting, from the recording, the feature time series pair comprising the first time series of the first participant and the second time series of the second participant comprises:
for each feature of the features exchanged between the first participant and the second participant:
extracting the feature from each frame of the recording for the first participant to generate a first frame-by-frame index of the feature, the first frame-by-frame index of the feature being the first time series of the first participant; and
extracting the feature from each frame of the recording for the second participant to generate a second frame-by-frame index of the feature, the second frame-by-frame index of the feature being the second time series of the second participant.

6. The method of claim 1, wherein the characteristics of the dynamic time warping path comprises a distance from a diagonal of a derivative dynamic time warping path of the feature time series pair.

7. The method of claim 1, wherein the features exchanged between the first participant and the second participant comprise facial action units, the facial action units being minimal units of facial activity that are anatomically separate and visually distinguishable.

8. The method of claim 1, wherein the individual social synchrony level indicates an extent to which a feature of the first participant and a feature of the second participant are coordinated with each other objectively and subjectively over time.

9. A computer-readable storage medium having instructions stored thereon that, when executed by a processing system, perform a method for automated social synchrony measurements as recited in any of claims 1 to 8.

10. A system for automated social synchrony measurements comprising:
a processing system;
a storage system; and
instructions stored on the storage system that, when executed by the processing system, direct the processing system to:
receive a recording of a social interaction between a first participant and a second participant, the social interaction comprising features exchanged between the first participant and the second participant;
for each feature of the features exchanged between the first participant and the second participant, extract, from the recording, a feature time series pair comprising a first time series of the first participant and a second time series of the second participant;
for each feature time series pair, determine an individual social synchrony level between the feature time series pair using characteristics of a dynamic time warping path of the feature time series pair;
analyze the determined individual social synchrony level of every feature time series pair to identify a set of the features exchanged between the first participant and the second participant related to a prediction target; and
generate a notification for at least one feature of the set of the features exchanged between the first participant and the second participant related to the prediction target based on the determined individual social synchrony level of the at least one feature.

11. The system of claim 10, wherein the instructions to analyze the determined individual social synchrony level of every feature time series pair to identify a set of the features exchanged between the first participant and the second participant related to the prediction target direct the processing system to:
analyze the determined individual social synchrony level of all feature time series pairs using a social synchrony prediction engine to identify the set of the features exchanged between the first participant and the second participant related to the prediction target,
wherein the social synchrony prediction engine comprises a neural network, a machine learning engine, or an artificial intelligence engine.

12. The system of claim 10, wherein the instructions further direct the processing system to:
analyze the determined individual social synchrony level of every feature time series pair to determine an overall social synchrony level between the first participant and the second participant; and
generate a notification associated with the overall social synchrony level between the first participant and the second participant.

13. The system of claim 10, wherein the instructions further direct the processing system to:
analyze the identified set of the features exchanged between the first participant and the second participant related to the prediction target using a social synchrony prediction engine to determine a prediction target-specific overall social synchrony level between the first participant and the second participant; and
generate a notification associated with the prediction target-specific overall social synchrony level between the first participant and the second participant.

14. The system of claim 10, wherein a first set of the features exchanged between the first participant and the second participant related to a first prediction target is different than a second set of the features exchanged between the first participant and the second participant related to a second prediction target.

15. The system of claim 10, wherein the instructions further direct the processing system to provide the notification for the at least one feature to a computing device of the first participant.

## Patentansprüche

1. Verfahren für automatisierte soziale Synchronitätsmessungen, umfassend:
Empfangen einer Aufzeichnung einer sozialen Interaktion zwischen einem ersten Teilnehmer und einem zweiten Teilnehmer, wobei die soziale Interaktion zwischen dem ersten Teilnehmer und dem zweiten Teilnehmer ausgetauschte Merkmale umfasst;
für jedes Merkmal der zwischen dem ersten Teilnehmer und dem zweiten Teilnehmer ausgetauschten Merkmale, Extrahieren eines Merkmalszeitreihenpaars aus der Aufzeichnung, das eine erste Zeitreihe des ersten Teilnehmers und eine zweite Zeitreihe des zweiten Teilnehmers umfasst;
für jedes Merkmalszeitreihenpaar, Bestimmen eines individuellen sozialen Synchronitätsniveaus zwischen dem Merkmalszeitreihenpaar unter Verwendung von Eigenschaften eines dynamischen Zeitverzerrungspfads des Merkmalszeitreihenpaars;
Analysieren des bestimmten individuellen sozialen Synchronitätsniveaus jedes Merkmalszeitreihenpaars, um einen Satz der zwischen dem ersten Teilnehmer und dem zweiten Teilnehmer ausgetauschten Merkmale zu identifizieren, die mit einem Vorhersageziel in Beziehung stehen; und
Erzeugen einer Benachrichtigung für mindestens ein Merkmal des Satzes der zwischen dem ersten Teilnehmer und dem zweiten Teilnehmer ausgetauschten Merkmale, die mit dem Vorhersageziel in Beziehung stehen, auf der Grundlage des bestimmten individuellen sozialen Synchronitätsniveaus des mindestens einen Merkmals.

2. Verfahren nach Anspruch 1, wobei das Analysieren des bestimmten individuellen sozialen Synchronitätsniveaus jedes Merkmalszeitreihenpaars, um einen Satz der zwischen dem ersten Teilnehmer und dem zweiten Teilnehmer ausgetauschten Merkmale zu identifizieren, die mit dem Vorhersageziel in Beziehung stehen, umfasst:
Analysieren des bestimmten individuellen sozialen Synchronitätsniveaus aller Merkmalszeitreihenpaare unter Verwendung einer Vorhersage-Engine für soziale Synchronität, um den Satz der zwischen dem ersten Teilnehmer und dem zweiten Teilnehmer ausgetauschten Merkmale zu identifizieren, die mit dem Vorhersageziel in Beziehung stehen,
wobei die Vorhersage-Engine für soziale Synchronität ein neuronales Netz, eine Maschinenlern-Engine oder eine Engine für künstliche Intelligenz umfasst.

3. Verfahren nach Anspruch 1, ferner umfassend:
Analysieren des bestimmten individuellen sozialen Synchronitätsniveaus jedes Merkmalszeitreihenpaars, um ein gesamtes soziales Synchronitätsniveau zwischen dem ersten Teilnehmer und dem zweiten Teilnehmer zu bestimmen; und
Erzeugen einer Benachrichtigung, die mit dem gesamten sozialen Synchronitätsniveau zwischen dem ersten Teilnehmer und dem zweiten Teilnehmer assoziiert ist.

4. Verfahren nach Anspruch 1, ferner umfassend:
Analysieren des identifizierten Satzes der zwischen dem ersten Teilnehmer und dem zweiten Teilnehmer ausgetauschten Merkmale, die mit dem Vorhersageziel in Beziehung stehen, unter Verwendung einer Vorhersage-Engine für soziale Synchronität, um ein vorhersagezielspezifisches gesamtes soziales Synchronitätsniveau zwischen dem ersten Teilnehmer und dem zweiten Teilnehmer zu bestimmen; und
Erzeugen einer Benachrichtigung, die mit dem vorhersagezielspezifischen gesamten sozialen Synchronitätsniveau zwischen dem ersten Teilnehmer und dem zweiten Teilnehmer assoziiert ist.

5. Verfahren nach Anspruch 1, wobei die Aufzeichnung eine Videoaufzeichnung ist,
wobei das Extrahieren des Merkmalszeitreihenpaars, das die erste Zeitreihe des ersten Teilnehmers und die zweite Zeitreihe des zweiten Teilnehmers umfasst, aus der Aufzeichnung umfasst:
für jedes Merkmal der zwischen dem ersten Teilnehmer und dem zweiten Teilnehmer ausgetauschten Merkmale:
Extrahieren des Merkmals aus jedem Einzelbild der Aufzeichnung für den ersten Teilnehmer, um einen ersten Bild-für-Bild-Index des Merkmals zu erzeugen, wobei der erste Bild-für-Bild-Index des Merkmals die erste Zeitreihe des ersten Teilnehmers ist; und
Extrahieren des Merkmals aus jedem Einzelbild der Aufzeichnung für den zweiten Teilnehmer, um einen zweiten Bild-für-Bild-Index des Merkmals zu erzeugen, wobei der zweite Bild-für-Bild-Index des Merkmals die zweite Zeitreihe des zweiten Teilnehmers ist.

6. Verfahren nach Anspruch 1, wobei die Eigenschaften des dynamischen Zeitverzerrungspfads einen Abstand von einer Diagonale eines abgeleiteten dynamischen Zeitverzerrungspfads des Merkmalszeitreihenpaars umfassen.

7. Verfahren nach Anspruch 1, wobei die zwischen dem ersten Teilnehmer und dem zweiten Teilnehmer ausgetauschten Merkmale faziale Aktionseinheiten umfassen, wobei die fazialen Aktionseinheiten minimale Einheiten der Gesichtsaktivität sind, die anatomisch getrennt und visuell unterscheidbar sind.

8. Verfahren nach Anspruch 1, wobei das individuelle soziale Synchronitätsniveau ein Ausmaß angibt, in dem ein Merkmal des ersten Teilnehmers und ein Merkmal des zweiten Teilnehmers objektiv und subjektiv über die Zeit miteinander koordiniert sind.

9. Computerlesbares Speichermedium, auf dem Anweisungen gespeichert sind, die bei Ausführung durch ein Verarbeitungssystem ein Verfahren für automatisierte soziale Synchronitätsmessungen ausführen, wie in einem der Ansprüche 1 bis 8 angegeben.

10. System für automatisierte soziale Synchronitätsmessungen, umfassend:
ein Verarbeitungssystem;
ein Speichersystem; und
Anweisungen, die auf dem Speichersystem gespeichert sind und die bei Ausführung durch das Verarbeitungssystem das Verarbeitungssystem veranlassen:
eine Aufzeichnung einer sozialen Interaktion zwischen einem ersten Teilnehmer und einem zweiten Teilnehmer zu empfangen, wobei die soziale Interaktion zwischen dem ersten Teilnehmer und dem zweiten Teilnehmer ausgetauschte Merkmale umfasst;
für jedes Merkmal der zwischen dem ersten Teilnehmer und dem zweiten Teilnehmer ausgetauschten Merkmale ein Merkmalszeitreihenpaar aus der Aufzeichnung zu extrahieren, das eine erste Zeitreihe des ersten Teilnehmers und eine zweite Zeitreihe des zweiten Teilnehmers umfasst;
für jedes Merkmalszeitreihenpaar ein individuelles soziales Synchronitätsniveau zwischen dem Merkmalszeitreihenpaar unter Verwendung von Eigenschaften eines dynamischen Zeitverzerrungspfads des Merkmalszeitreihenpaars zu bestimmen;
das bestimmte individuelle soziale Synchronitätsniveau jedes Merkmalszeitreihenpaars zu analysieren, um einen Satz der zwischen dem ersten Teilnehmer und dem zweiten Teilnehmer ausgetauschten Merkmale zu identifizieren, die mit einem Vorhersageziel in Beziehung stehen; und
eine Benachrichtigung für mindestens ein Merkmal des Satzes der zwischen dem ersten Teilnehmer und dem zweiten Teilnehmer ausgetauschten Merkmale, die mit dem Vorhersageziel in Beziehung stehen, auf der Grundlage des bestimmten individuellen sozialen Synchronitätsniveaus des mindestens einen Merkmals zu erzeugen.

11. System nach Anspruch 10, wobei die Anweisungen zum Analysieren des bestimmten individuellen sozialen Synchronitätsniveaus jedes Merkmalszeitreihenpaars, um einen Satz der zwischen dem ersten Teilnehmer und dem zweiten Teilnehmer ausgetauschten Merkmale zu identifizieren, die mit dem Vorhersageziel in Beziehung stehen, das Verarbeitungssystem veranlassen:
das bestimmte individuelle soziale Synchronitätsniveau aller Merkmalszeitreihenpaare unter Verwendung einer Vorhersage-Engine für soziale Synchronität zu analysieren, um den Satz der zwischen dem ersten Teilnehmer und dem zweiten Teilnehmer ausgetauschten Merkmale zu identifizieren, die mit dem Vorhersageziel in Beziehung stehen,
wobei die Vorhersage-Engine für soziale Synchronität ein neuronales Netz, eine Maschinenlern-Engine oder eine Engine für künstliche Intelligenz umfasst.

12. System nach Anspruch 10, wobei die Anweisungen das Verarbeitungssystem ferner veranlassen:
das bestimmte individuelle soziale Synchronitätsniveau jedes Merkmalszeitreihenpaars zu analysieren, um ein gesamtes soziales Synchronitätsniveau zwischen dem ersten Teilnehmer und dem zweiten Teilnehmer zu bestimmen; und
eine Benachrichtigung zu erzeugen, die mit dem gesamten sozialen Synchronitätsniveau zwischen dem ersten Teilnehmer und dem zweiten Teilnehmer assoziiert ist.

13. System nach Anspruch 10, wobei die Anweisungen das Verarbeitungssystem ferner veranlassen:
den identifizierten Satz der zwischen dem ersten Teilnehmer und dem zweiten Teilnehmer ausgetauschten Merkmale, die mit dem Vorhersageziel in Beziehung stehen, unter Verwendung einer Vorhersage-Engine für soziale Synchronität zu analysieren, um ein vorhersagezielspezifisches gesamtes soziales Synchronitätsniveau zwischen dem ersten Teilnehmer und dem zweiten Teilnehmer zu bestimmen; und
eine Benachrichtigung zu erzeugen, die mit dem vorhersagezielspezifischen gesamten sozialen Synchronitätsniveau zwischen dem ersten Teilnehmer und dem zweiten Teilnehmer assoziiert ist.

14. System nach Anspruch 10, wobei ein erster Satz der zwischen dem ersten Teilnehmer und dem zweiten Teilnehmer ausgetauschten Merkmale, die mit einem ersten Vorhersageziel in Beziehung stehen, von einem zweiten Satz der zwischen dem ersten Teilnehmer und dem zweiten Teilnehmer ausgetauschten Merkmale, die mit einem zweiten Vorhersageziel in Beziehung stehen, verschieden ist.

15. System nach Anspruch 10, wobei die Anweisungen das Verarbeitungssystem ferner veranlassen, die Benachrichtigung für das mindestens eine Merkmal an eine Rechenvorrichtung des ersten Teilnehmers bereitzustellen.

## Revendications

1. Procédé de mesures automatisées de synchronisation sociale, comprenant :
la réception d'un enregistrement d'une interaction sociale entre un premier participant et un second participant, l'interaction sociale comprenant des caractéristiques échangées entre le premier participant et le second participant ;
pour chaque caractéristique des caractéristiques échangées entre le premier participant et le second participant, l'extraction, à partir de l'enregistrement, d'une paire de séries temporelles de caractéristiques comprenant une première série temporelle du premier participant et une seconde série temporelle du second participant ;
pour chaque paire de séries temporelles de caractéristiques, la détermination d'un niveau de synchronisation sociale individuel entre la paire de séries temporelles de caractéristiques à l'aide de caractéristiques d'un chemin de déformation temporelle dynamique de la paire de séries temporelles de caractéristiques ;
l'analyse du niveau de synchronisation sociale individuel déterminé de chaque paire de séries temporelles de caractéristiques pour identifier un ensemble des caractéristiques échangées entre le premier participant et le second participant en relation avec une cible de prédiction ; et
la génération d'une notification pour au moins une caractéristique de l'ensemble des caractéristiques échangées entre le premier participant et le second participant en relation avec la cible de prédiction sur la base du niveau de synchronisation sociale individuel déterminé de l'au moins une caractéristique.

2. Procédé selon la revendication 1, dans lequel l'analyse du niveau de synchronisation sociale individuel déterminé de chaque paire de séries temporelles de caractéristiques pour identifier un ensemble des caractéristiques échangées entre le premier participant et le second participant en relation avec la cible de prédiction comprend :
l'analyse du niveau de synchronisation sociale individuel déterminé de toutes les paires de séries temporelles de caractéristiques à l'aide d'un moteur de prédiction de synchronisation sociale pour identifier l'ensemble des caractéristiques échangées entre le premier participant et le second participant en relation avec la cible de prédiction,
dans lequel le moteur de prédiction de synchronisation sociale comprend un réseau neuronal, un moteur d'apprentissage automatique ou un moteur d'intelligence artificielle.

3. Procédé selon la revendication 1, comprenant en outre :
l'analyse du niveau de synchronisation sociale individuel déterminé de chaque paire de séries temporelles de caractéristiques pour déterminer un niveau global de synchronisation sociale entre le premier participant et le second participant ; et
la génération d'une notification associée au niveau global de synchronisation sociale entre le premier participant et le second participant.

4. Procédé selon la revendication 1, comprenant en outre :
l'analyse de l'ensemble identifié des caractéristiques échangées entre le premier participant et le second participant en relation avec la cible de prédiction à l'aide d'un moteur de prédiction de synchronisation sociale pour déterminer un niveau global de synchronisation sociale spécifique à la cible de prédiction entre le premier participant et le second participant ; et
la génération d'une notification associée au niveau global de synchronisation sociale spécifique à la cible de prédiction entre le premier participant et le second participant.

5. Procédé selon la revendication 1, dans lequel l'enregistrement est un enregistrement vidéo,
dans lequel l'extraction, à partir de l'enregistrement, de la paire de séries temporelles de caractéristiques comprenant la première série temporelle du premier participant et la seconde série temporelle du second participant comprend :
pour chaque caractéristique des caractéristiques échangées entre le premier participant et le second participant :
l'extraction de la caractéristique à partir de chaque image de l'enregistrement pour le premier participant afin de générer un premier indice image par image de la caractéristique, le premier indice image par image de la caractéristique étant la première série temporelle du premier participant ; et
l'extraction de la caractéristique à partir de chaque image de l'enregistrement pour le second participant afin de générer un second indice image par image de la caractéristique, le second indice image par image de la caractéristique étant la seconde série temporelle du second participant.

6. Procédé selon la revendication 1, dans lequel les caractéristiques du chemin de déformation temporelle dynamique comprennent une distance par rapport à une diagonale d'un chemin de déformation temporelle dynamique dérivée de la paire de séries temporelles de caractéristiques.

7. Procédé selon la revendication 1, dans lequel les caractéristiques échangées entre le premier participant et le second participant comprennent des unités d'action faciale, les unités d'action faciale étant des unités minimales d'activité faciale qui sont anatomiquement distinctes et visuellement distinguables.

8. Procédé selon la revendication 1, dans lequel le niveau de synchronisation sociale individuel indique une mesure dans laquelle une caractéristique du premier participant et une caractéristique du second participant sont coordonnées l'une avec l'autre de manière objective et subjective au fil du temps.

9. Support de stockage lisible par ordinateur sur lequel sont stockées des instructions qui, lorsqu'elles sont exécutées par un système de traitement, exécutent un procédé de mesures automatisées de synchronisation sociale tel que revendiqué dans l'une quelconque des revendications 1 à 8.

10. Système de mesures automatisées de synchronisation sociale, comprenant :
un système de traitement ;
un système de stockage ; et
des instructions stockées sur le système de stockage qui, lorsqu'elles sont exécutées par le système de traitement, ordonnent au système de traitement de :
recevoir un enregistrement d'une interaction sociale entre un premier participant et un second participant, l'interaction sociale comprenant des caractéristiques échangées entre le premier participant et le second participant ;
pour chaque caractéristique des caractéristiques échangées entre le premier participant et le second participant, extraire, à partir de l'enregistrement, une paire de séries temporelles de caractéristiques comprenant une première série temporelle du premier participant et une seconde série temporelle du second participant ;
pour chaque paire de séries temporelles de caractéristiques, déterminer un niveau de synchronisation sociale individuel entre la paire de séries temporelles de caractéristiques à l'aide de caractéristiques d'un chemin de déformation temporelle dynamique de la paire de séries temporelles de caractéristiques ;
analyser le niveau de synchronisation sociale individuel déterminé de chaque paire de séries temporelles de caractéristiques pour identifier un ensemble des caractéristiques échangées entre le premier participant et le second participant en relation avec une cible de prédiction ; et
générer une notification pour au moins une caractéristique de l'ensemble des caractéristiques échangées entre le premier participant et le second participant en relation avec la cible de prédiction sur la base du niveau de synchronisation sociale individuel déterminé de l'au moins une caractéristique.

11. Système selon la revendication 10, dans lequel les instructions pour analyser le niveau de synchronisation sociale individuel déterminé de chaque paire de séries temporelles de caractéristiques pour identifier un ensemble des caractéristiques échangées entre le premier participant et le second participant en relation avec la cible de prédiction ordonnent au système de traitement de :
analyser le niveau de synchronisation sociale individuel déterminé de toutes les paires de séries temporelles de caractéristiques à l'aide d'un moteur de prédiction de synchronisation sociale pour identifier l'ensemble des caractéristiques échangées entre le premier participant et le second participant en relation avec la cible de prédiction,
dans lequel le moteur de prédiction de synchronisation sociale comprend un réseau neuronal, un moteur d'apprentissage automatique ou un moteur d'intelligence artificielle.

12. Système selon la revendication 10, dans lequel les instructions ordonnent en outre au système de traitement de :
analyser le niveau de synchronisation sociale individuel déterminé de chaque paire de séries temporelles de caractéristiques pour déterminer un niveau global de synchronisation sociale entre le premier participant et le second participant ; et
générer une notification associée au niveau global de synchronisation sociale entre le premier participant et le second participant.

13. Système selon la revendication 10, dans lequel les instructions ordonnent en outre au système de traitement de :
analyser l'ensemble identifié des caractéristiques échangées entre le premier participant et le second participant en relation avec la cible de prédiction à l'aide d'un moteur de prédiction de synchronisation sociale pour déterminer un niveau global de synchronisation sociale spécifique à la cible de prédiction entre le premier participant et le second participant ; et
générer une notification associée au niveau global de synchronisation sociale spécifique à la cible de prédiction entre le premier participant et le second participant.

14. Système selon la revendication 10, dans lequel un premier ensemble des caractéristiques échangées entre le premier participant et le second participant en relation avec une première cible de prédiction est différent d'un second ensemble des caractéristiques échangées entre le premier participant et le second participant en relation avec une seconde cible de prédiction.

15. Système selon la revendication 10, dans lequel les instructions ordonnent en outre au système de traitement de fournir la notification pour l'au moins une caractéristique à un dispositif informatique du premier participant.
